# EUROPÄISCHE PATENTSCHRIFT

(11) **EP 3 882 048 B1**
(45) Veröffentlichungstag und Bekanntmachung des Hinweises auf die Patenterteilung: **07.06.2023**
(21) Anmeldenummer: 20164579.3
(22) Anmeldetag: 20.03.2020
(51) Int. Cl.: B60C 1/00, B60C 23/00, B60C 23/04

(54) **FAHRZEUGRAD-DREHDURCHFÜHRUNG, FAHRZEUGRAD-BAUGRUPPE, SELBSTFAHRENDE ARBEITSMASCHINE UND VERFAHREN ZUM BETRIEB EINER FAHRZEUGRAD-DREHDURCHFÜHRUNG**
VEHICLE WHEEL ROTARY TRANSFER JOINT, VEHICLE WHEEL ASSEMBLY, SELF-PROPELLED WORKING MACHINE AND METHOD FOR OPERATING A VEHICLE WHEEL ROTARY TRANSFER JOINT
PASSAGE TOURNANT DE ROUE DE VÉHICULE, MODULE DE ROUE DE VÉHICULE, MACHINE DE TRAVAIL AUTOMOBILE ET PROCÉDÉ DE FONCTIONNEMENT D'UN PASSAGE TOURNANT DE ROUE DE VÉHICULE

(43) Veröffentlichungstag der Anmeldung: 22.09.2021
(73) Patentinhaber: Schulte, Reinhold, 33106 Paderborn (DE)
(72) Erfinder: Schulte, Reinhold, 33106 Paderborn (DE)
(74) Vertreter: REHBERG HÜPPE + PARTNER

(56) Entgegenhaltungen:
- EP-A1- 3 730 321
- DE-A1-102018 101 411

## Beschreibung

### TECHNISCHES GEBIET DER ERFINDUNG

Die Erfindung betrifft eine Fahrzeugrad-Drehdurchführung, die insbesondere Einsatz findet in einer selbstfahrenden Arbeitsmaschine, bei der es sich um einen Traktor, ein Erntefahrzeug o. ä. handeln kann. Mittels der Fahrzeugrad-Drehdurchführung wird mindestens ein pneumatisches Signal, insbesondere ein pneumatischer Versorgungsdruck und/oder ein pneumatischer Steuerdruck, zwischen zwei relativ zueinander verdrehten Teilen übertragen. Bei diesen Teilen handelt es sich beispielsweise um einen nicht rotierenden Fahrzeugradträger und ein rotierendes Fahrzeugrad, während es sich bei einem zu übertragenden Steuerdruck um einen Steuerdruck für ein an dem Fahrzeugrad gehaltenes Reifendruckregelventil (beispielsweise ein Be- und Entlüftungsventil für den Reifen des Fahrzeugrades) handeln kann und bei einem Versorgungsdruck um einen Druck für das Befüllen des Reifens des Fahrzeugrades (insbesondere unter Steuerung durch das von dem Steuerdruck gesteuerten Reifendruckregelventils) handeln kann. Die Fahrzeugrad-Drehdurchführung verfügt über ein erstes Drehdurchführungsteil, welches als Stator ausgebildet sein kann und an dem Fahrzeugradträger befestigt oder abgestützt sein kann, und ein zweites Drehdurchführungsteil, welches auch als Rotor bezeichnet werden kann und welches mit dem Fahrzeugrad relativ zu dem Fahrzeugradträger oder dem Stator verdreht wird. Die beiden Drehdurchführungsteile sind dabei über ein Lager drehbar gegeneinander abgestützt.

Des Weiteren betrifft die Erfindung eine Fahrzeugrad-Baugruppe mit einer derartigen Fahrzeugrad-Drehdurchführung, eine selbstfahrende Arbeitsmaschine mit mindestens einer derartigen Fahrzeugrad-Baugruppe sowie ein Verfahren zum Betrieb einer derartigen Fahrzeugrad-Drehdurchführung.

### STAND DER TECHNIK

Die Druckschrift DE 10 2018 101 411 A1 offenbart eine nicht gattungsgemäße Drehdurchführung, die von einem Radlager des Fahrzeugrads ausgebildet ist, welches die Radlast abstützt, und die der Durchleitung eines Versorgungsdrucks zu einem Reifen dient. Das Radlager verfügt dabei über einen Außenring mit einer in den Reifen des Fahrzeugrades mündenden Ausgangsbohrung und einen Innenring mit einer Einlassbohrung, die mit einer Druckluftquelle verbindbar ist, um den Reifen zu befüllen. Drehfest mit dem ruhenden Innenring verbunden ist eine Dichteinheit. Die Dichteinheit weist einen Dichtungshalter auf, der einen Einlasskanal aufweist. Der Versorgungsdruck kann durch die Eingangsbohrung des Innenrings in den Einlasskanal des Dichtungshalters übertreten, wobei eine Abdichtung zwischen dem Dichtungshalter und dem Innenring über einen O-Ring erfolgt. Der Einlasskanal mündet in eine Druckkammer. Die Druckkammer ist hierbei ringförmig ausgebildet und in Richtung des Außenrings offen. In der Art eines Ringkolbens ist die Druckkammer auf der dem Außenring zugewandten Seite verschlossen durch einen Haltering, der in axialer Richtung der Drehdurchführung nebeneinander einen verschleißfesten, nicht elastischen Abstützring und einen elastischen Dichtring trägt. Mit der Druckbeaufschlagung der Drucckammer wird der Haltering mit dem Abstützring und dem Dichtring gegen den Außenring gepresst. Infolge der so herbeigeführten Abdichtung des Dichtungshalters gegenüber dem Außenring und der Abdichtung des Dichtungshalters über den O-Ring gegenüber dem Innenring erfolgt somit eine Bereitstellung einer ersten Abdichtung zwischen dem Außenring und dem Innenring. Eine zweite Abdichtung wird durch eine entsprechende weitere Dichteinheit bereitgestellt. Zwischen dem Zwischenraum der Dichtungshalter der beiden Dichteinheiten und der Ausgangsbohrung des Außenrings ist ein Übertrittsquerschnitt gebildet, der beidseits in axialer Richtung durch die Abdichtungen durch die Dichteinheiten abgedichtet ist. Querbohrungen der Dichtungshalter verbinden die jeweilige Druckkammer mit dem Zwischenraum und damit mit dem Übertrittsbereich. Werden die beiden den Dichteinheiten zugeordneten Eingangsbohrungen des Innenrings mit dem Versorgungsdruck beaufschlagt, führt dies dazu, dass unter Abdichtung durch die Dichteinheiten Fluid von der Eingangsbohrung des Innenrings zu dem Einlasskanal des Dichtungshalters in die Druckkammer und von dieser über die Querbohrung, den Zwischenraum zwischen den Dichtungshaltern und den Übertrittsbereich zu der Ausgangsbohrung des Außenrings und damit zum Reifen gelangen kann. Die Anpresskraft der Dichtringe sowie der Abstützringe ist dabei abhängig von der Größe des Versorgungsdrucks, der an der Eingangsbohrung des Innenrings anliegt. Die von der Druckkammer ausgehende Querbohrung kann als Drossel ausgebildet sein, so dass sich in der Druckkammer ein Staudruck ergibt. Durch die Dimensionierung der Drossel kann der Staudruck und damit auch die Anpresskraft des Abstützrings und des Dichtrings konstruktiv vorgegeben werden. Kommt es zu einem Verschleiß des Abstützrings und des Dichtrings, erfolgt eine automatische Verschleißnachstellung, indem der Haltering entsprechend dem Ausmaß des Verschleißes infolge des wirkenden Drucks weiter nach außen bewegt wird. Diese Bewegung wird durch eine elastische Aufweitung des Halterings infolge des Drucks in der Druckkammer bewirkt. Der Abstützring gewährleistet keine vollständige Abdichtung. Ist der Abstützring dem Dichtring in Richtung des Übertrittsbereichs vorgeordnet, kann mit zunehmender Dauer der Druckbeaufschlagung mehr und mehr Druckluft an dem Abstützring vorbeiströmen, womit ein Druckraum zwischen dem Abstützring und dem Dichtring zunehmend druckbeaufschlagt wird. Die zunehmende Druckerhöhung in diesem Druckraum führt zu einer sich vergrößernden Druckkraft auf den Haltering, die entgegengesetzt zur Druckbeaufschlagung des Halterings durch die Druckkammer wirkt. Der erläuterte allmähliche Druckausgleich durch das Überströmen des Abstützrings kann somit zu einer zunehmenden Reduzierung der Anpresskraft des Abstützrings und des Dichtrings an den Außenring führen, womit sich auch ein Verschleiß reduzieren kann. Nicht in DE 10 2018 101 411 A1 offenbart ist, wie eine Abdichtung des Halterings gegenüber dem Dichtungshalter erfolgt.

Den allgemeinen Hintergrund zu der Erfindung und zu einem Einsatzzweck einer Drehdurchführung für eine Agrarfahrzeug-Reifendruckanlage beschreibt EP 3 730 321 A1.

### AUFGABE DER ERFINDUNG

Der Erfindung liegt die Aufgabe zugrunde, eine Fahrzeugrad-Drehdurchführung vorzuschlagen, die insbesondere hinsichtlich
- der Bauraumverhältnisse und des Bauaufwands und/oder
- des Verschleißes und/oder
- der Dichtwirkung und/oder
- der Reibung bei der relativen Verdrehung der Drehdurchführungsteile und/oder
- der Ermöglichung einer Schmierung eines Lagers der Fahrzeugrad-Drehdurchführung
   und der Vermeidung eines Eintritts von Schmiermittel in den pneumatischen Kreis verbessert ist.

Des Weiteren liegt der Erfindung die Aufgabe zugrunde,
- eine entsprechend verbesserte Fahrzeugrad-Baugruppe,
- eine entsprechend verbesserte selbstfahrende Arbeitsmaschine und
- ein entsprechend verbessertes Verfahren zum Betrieb einer Fahrzeugrad-Drehdurchführung
   vorzuschlagen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung betrifft eine radlastfreie Fahrzeugrad-Drehdurchführung. Hierunter wird eine Fahrzeugrad-Drehdurchführung verstanden, die (abweichend zu dem eingangs genannten Stand der Technik DE 10 2018 101 411 A1) nicht mit den Wälzlagern gebildet ist, über welche die Radlast des Fahrzeugrads abgestützt ist. Vielmehr dient die radlastfreie Fahrzeugrad-Drehdurchführung lediglich oder vorrangig dem Anschluss und der Verbindung pneumatischer Leitungen und der Übertragung eines pneumatischen Steuerdrucks und/oder Versorgungsdrucks zwischen den relativ zueinander bewegten Drehdurchführungsteilen.

Die erfindungsgemäße Fahrzeugrad-Drehdurchführung weist zwei Drehdurchführungsteile auf, die jeweils einen Kanal aufweisen. Hierbei sind die Drehdurchführungsteile beispielsweise als Außenring und Innenring ausgebildet, die unmittelbar über ein Lager drehbar gegeneinander abgestützt sind, wobei möglich ist, dass der Innenring und der Außenring die Außengeometrie der Fahrzeugrad-Drehdurchführung vorgeben. Das erste Drehdurchführungsteil kann dabei als Stator ausgebildet sein, an welchem insbesondere Leitungen von dem Fahrzeugradträger angeschlossen werden, während das zweite Drehdurchführungsteil unmittelbar oder mittelbar an dem Fahrzeugrad, insbesondere einer Felge (bspw. im Bereich des Felgenbetts oder eines Felgenkörpers oder Felgenflansches), befestigt sein kann.

Die erfindungsgemäße Fahrzeugrad-Drehdurchführung verfügt über einen Übertrittsbereich, der zwischen den beiden Drehdurchführungsteilen ausgebildet ist. Der Übertrittsbereich verbindet (vorzugsweise unabhängig von dem relativen Drehwinkel der Drehdurchführungsteile) den ersten Kanal des ersten Drehdurchführungsteils mit dem zweiten Kanal des zweiten Drehdurchführungsteils. Um zu vermeiden, dass bei dieser Übertragung ein (übermäßiger) Austritt des Arbeitsmediums erfolgt, ist der Übertrittsbereich über Dichteinheiten abgedichtet, die eine (vollständige, weitestgehende oder teilweise) Dichtwirkung bereitstellen.

Im Rahmen der Erfindung finden nicht Dichteinheiten Einsatz, welche ausschließlich durch eine Vorspannung die Dichtwirkung herbeiführen. Vielmehr verfügt die Fahrzeugrad-Drehdurchführung über eine Dichtwirkungs-Steuerkammer. Die Dichtwirkungs-Steuerkammer kann bspw. unmittelbar und einstückig von einem Drehdurchführungsteil, insbesondere einem als Innenring ausgebildeten Stator, ausgebildet sein. In die Dichtwirkungs-Steuerkammer mündet ein Dichtungs-Steuerkanal ein. Über den Dichtungs-Steuerkanal kann die Dichtwirkungs-Steuerkammer mit einem Dichtungs-Steuerdruck beaufschlagt werden. Die Dichteinheit schließt die Dichtwirkungs-Steuerkammer in der Art eines verschieblichen Kolbens, wobei mehrere derartige Kolben von mehreren Dichtwirkungs-Steuerkammern in Umfangsrichtung verteilt angeordnet sein können oder die Dichtwirkungs-Steuerkammer in Umfangsrichtung durchgehend ausgebildet ist und die Dichteinheit eine Art Ringkolben bildet. Hierbei ist die Verschiebe-Richtung des Kolbens in Richtung einer Flächennormalen der Dichtfläche, mit der die Dichteinheit zusammenwirkt, oder unter einem spitzen Winkel gegenüber der Flächennormalen orientiert. Dies hat zur Folge, dass mit einer Veränderung der Druckbeaufschlagung der Dichtwirkungs-Steuerkammer mit dem Dichtungs-Steuerdruck die Anpresskraft der Dichteinheit an die zugeordnete Dichtfläche veränderbar ist. Je nach Dichtungs-Steuerdruck kann somit eine Beeinflussung der über die Dichteinheiten hervorgerufenen Dichtwirkung, der Reibung der Dichteinheit an der Dichtfläche und des hierdurch hervorgerufenen Verschleißes erfolgen.

Im Rahmen der Erfindung kann der Dichtung-Steuerdruck bspw.
- dem Steuerdruck eines an dem Fahrzeugrad gehaltenen Reifendruckregelventils (insbesondere Be- und Entlüftungsventils) entsprechen oder von diesem abhängen,
- dem Versorgungsdruck eines derartigen Reifendruckregelventils entsprechen oder von diesem abhängigen oder
- ein von dem Steuerdruck und Versorgungsdruck unabhängiger Dichtung-Steuerdruck sein.

Erfindungsgemäß ist die Dichtwirkungs-Steuerkammer bis auf die Verbindung mit dem Dichtungs-Steuerkanal (und infolge der kolbenartigen Abdichtung durch die Dichteinheit) geschlossen, so dass zwar infolge der Druckbeaufschlagung des Dichtungs-Steuerkanals mit dem Dichtungs-Steuerdruck die Druckverhältnisse in der Dichtwirkungs-Steuerkammer verändert werden kann. Mit Erhöhung oder Verringerung des Dichtungs-Steuerdrucks kann, auch mit einer hiermit verbundenen Bewegung der kolbenartigen Dichteinheit ein kleiner Volumenstrom von dem Dichtungs-Steuerkanal zusätzlich in die Dichtwirkungs-Steuerkammer eintreten oder aus dieser in entgegengesetzter Richtung wieder austreten. Die Dichtwirkungs-Steuerkammer ist aber nicht durchströmt, so dass die Dichtwirkungs-Steuerkammer als eine Art "Totkammer" ausgebildet ist.

Für eine bevorzugte Ausgestaltung beaufschlagt der Dichtungs-Steuerdruck in der Dichtwirkungs-Steuerkammer die Dichteinheit in radialer Richtung, was bedeutet, dass die Dichteinheit in der Art eines verschieblichen Kolbens einen in radialer Richtung orientierten Freiheitsgrad aufweist. Dies erzeugt eine Dichtkraft, die ebenfalls in radialer Richtung wirkt. Mit der Dichtkraft wird dann die Dichteinheit gegen eine zylindrische Dichtfläche eines Drehdurchführungsteils, insbesondere des Rotors, gepresst.

Für die Ausgestaltung der Dichteinheit gibt es vielfältige Möglichkeiten. Möglich ist beispielsweise, dass die Dichteinheit einen kolbenartigen Führungskörper aufweist, an welchem mindestens ein Dichtelement gehalten ist, welches dann mit der zugeordneten Dichtfläche in Wirkverbindung tritt. Möglich ist, dass (grundsätzlich der Ausführungsform gemäß DE 10 2018 101 411 A1) in axialer Richtung mehrere Dichtelemente der Dichteinheit nebeneinander angeordnet sind. In diesem Fall können die Dichtelemente gleiche oder unterschiedliche Funktionen erfüllen. Sind mehrere Dichtelemente auf diese Weise axial nebeneinander angeordnet, können diese eine sukzessive und sich verstärkende Abdichtung bilden. Möglich ist auch, dass ein Dichtelement eine größere Elastizität aufweist, um die eigentliche Dichtfunktion bereitzustellen, während das andere Dichtelemente eine kleinere oder keine Elastizität aufweisen kann und als eine Art Verschleißring ausgebildet sein kann.

Für einen Vorschlag der Erfindung verfügt die Dichteinheit über ein erstes Dichtelement und ein zweites Dichtelement. Diese Dichtelemente dienen jeweils spezifisch der Abdichtung gegenüber einem zugeordneten Drehdurchführungsteil: Das erste Dichtelement dient der Abdichtung an der zylindrischen Dichtfläche eines Drehdurchführungsteils, insbesondere des Rotors. Damit wird dieses Dichtelement in radialer Richtung an die zylindrische Dichtfläche angepresst. Hingegen gewährleistet ein zweites Dichtelement eine Abdichtung gegenüber der Dichtwirkungs-Steuerkammer, die in dem anderen Drehdurchführungsteil (insbesondere dem Stator) ausgebildet ist. Hierbei kann das zweite Dichtelement eine Dichtwirkung des "Kolbens" in der Führungsausnehmung des Drehdurchführungsteils (insbesondere Stators) gewährleisten, so dass dieses Dichtelement einerseits eine kolbenartige Verschiebung gegenüber dem Drehdurchführungsteil gewährleisten muss und andererseits eine Abdichtung quer zu der Bewegungsrichtung dieses Dichtelements, also quer zu dem Freiheitsgrad des "Kolbens" gewährleisten muss. Durch die Nutzung der beiden Dichtelemente und die funktionale Aufteilung der Wirkung derselben kann eine spezifische Gestaltung der beiden Dichtelemente für die zugeordneten Funktionen erfolgen. Für diesen Vorschlag werden das erste Dichtelement und das zweite Dichtelement bei Beaufschlagung der Dichtwirkungs-Steuerkammer mit dem Dichtungs-Steuerdruck in radialer Richtung zur Gewährleistung einer Abdichtung aneinander angepresst. Hierbei kann das erste Dichtelement auf der der zylindrischen Dichtfläche zugewandten Seite eine erste Dichtfläche ausbilden, die an der Dichtfläche anliegt, während das erste Dichtelement auf der gegenüberliegenden Seite eine zweite Dichtfläche ausbildet, an welcher das zweite Dichtelement zur Anlage kommt. Das zweite Dichtelement kann eine entsprechende Dichtfläche für den Kontakt mit dem ersten Dichtelement aufweisen sowie mindestens eine weitere zusätzliche Dichtfläche, im Bereich welcher die Abdichtung des "Kolbens" erfolgt. Die beiden Dichtelemente sind somit in dem Kraftfluss von der Dichtwirkungs-Steuerkammer über das zweite Dichtelemente zu dem ersten Dichtelement und von diesem zu der zylindrischen Dichtfläche in Reihenschaltung angeordnet. Anders gesagt wird die von dem Dichtungs-Steuerdruck in der Dichtwirkungs-Steuerkammer erzeugte Dichtkraft genutzt, um das zweite Dichtelement an das erste Dichtelement anzupressen, um zwischen diesen eine Dichtwirkung herbeizuführen sowie um das erste Dichtelement an die zylindrische Dichtfläche anzupressen, um hier ebenfalls eine Dichtwirkung herbeizuführen.

Die beiden vorgenannten Dichtelemente können im Rahmen der Erfindung beliebig ausgestaltet sein. Möglich ist, dass das erste Dichtelement ein eigensteifer Gleitring ist. Die außenliegende Mantelfläche des Gleitrings ist hierbei angepasst an den Kontakt mit der zylindrischen Dichtfläche, so dass diese bspw. im Halblängsschnitt
- geradlinig sein kann,
- im Bereich der axialen Ränder eine Phase aufweisen kann,
- einen kurvenförmigen Verlauf aufweisen kann oder
- konvex ausgebildet sein kann.

Hingegen ist die Innenfläche des Gleitrings an den Kontakt mit dem zweiten Dichtelement angepasst, so dass die Innenfläche ebenfalls einen geradlinigen Halblängsschnitt aufweisen kann oder beliebig kurvenförmig ausgebildet sein oder konkav ausgebildet sein kann.

Das zweite Dichtelement kann als biegeweicher und/oder elastischer Dichtring ausgebildet sein. Vorzugsweise ist der Dichtring in einem Spritzgießverfahren oder mittels Formpressen hergestellt. Der Dichtring kann aus einem elastischen Kunststoff, Kautschuk, Perfluorkautschuk (FFKM oder FFPM), Polyethylen (PE) oder Polytetrafluorethylen (PTFE) hergestellt sein, um lediglich einige die Erfindung nicht beschränkende Beispiele zu nennen. Der Dichtring kann einen beliebigen Querschnitt aufweisen, beispielsweise als O-Ring ausgebildet sein (einschließlich der Ausführungsformen, die in ISO 3601 genormt sind), als Rundring, als Null-Ring, Quadring oder X-Ring, um einige die Erfindung nicht beschränkende Beispiele zu nennen.

Findet als erstes Dichtelement ein eigensteifer Gleitring Einsatz, muss dieser dennoch je nach Druckbeaufschlagung mit dem Dichtungs-Steuerdruck elastisch radial aufgeweitet werden und es muss möglich sein, dass sich bei einer Reduzierung des Dichtungs-Steuerdrucks der Durchmesser automatisch elastisch verringert. Ist der eigensteife Gleitring in Umfangsrichtung geschlossen ausgebildet, erfordert die radiale Aufweitung unter Umständen große wirkende Kräfte, die durch den Dichtungs-Steuerdruck herbeigeführt werden müssen.

Die Ausgestaltung des Gleitrings mit einer Eigensteifigkeit kann dazu genutzt werden, dass mit der Applikation des Dichtungs-Steuerdrucks eine elastische Verformung des Gleitrings erfolgt, beispielsweise eine Aufweitung desselben. Infolge dieser Aufweitung des Gleitrings kann die Dichteinheit zur Anlage an die Dichtfläche gebracht werden, womit aktiv die Dichtwirkung erzeugt werden kann. Ebenfalls möglich ist, dass infolge der Aufweitung des Gleitrings eine vorhandene Dichtwirkung aktiv verstärkt wird. Wird dann der Dichtungs-Steuerdruck reduziert oder beseitigt, soll die Anpresskraft der Dichteinheit an die Dichtfläche reduziert werden oder die Dichteinheit sogar von der Dichtfläche vollständig wegbewegt werden, so dass kein Reibkontakt mehr wirksam ist zwischen Dichteinheit und Dichtfläche. Diese Rückstellbewegung, die mit einer Verringerung des Durchmessers des Gleitrings verbunden ist, kann infolge der Elastizität des eigensteifen Gleitrings herbeigeführt werden: Entfällt die von dem Dichtungs-Steuerdruck auf den Gleitring wirkende, aufweitende Kraft, stellt die Elastizität des eigensteifen Gleitrings eine Rückstellkraft zur Verfügung, die zur Reduzierung des Durchmessers führt und die Verringerung der Dichtwirkung oder die vollständige Beseitigung des Kontakts zwischen dem Gleitring und der Dichtfläche zur Folge hat.

Für einen Vorschlag der Erfindung ist der eigensteife Gleitring mit einem Schlitz ausgestattet, der eine einfache Veränderung des Durchmessers infolge des Dichtungs-Steuerdrucks ermöglicht. In diesem Fall werden die Abschnitte des Gleitrings infolge der von dem Dichtungs-Steuerdruck erzeugten Kraft auf Biegung derart beaufschlagt, dass sich die Krümmung des Gleitrings und damit der Durchmesser des Gleitrings verändert. Mit der Veränderung des Durchmessers kann sich dann der Schlitz des Gleitrings weiter öffnen oder schließen.

Möglich ist, dass der Schlitz durch ein zusätzliches Dichtelement zwischen den den Schlitz begrenzenden Stirnflächen abgedichtet ist. Dieses zusätzliche Dichtelement kann beispielsweise in den Schlitz eingespritztes elastomeres Material sein oder dem Schlitz ist in axialer Richtung ein weiteres Dichtelement vor- und/oder nachgeordnet. Möglich ist aber auch, dass die Minderung der Dichtwirkung im Bereich des Schlitzes dadurch auf ein hinnehmbares Maß reduziert wird, dass der Schlitz nicht geradlinig ausgebildet ist. Möglich ist, dass der Schlitz kurvenförmig, hin- und hergehend, meanderförmig, labyrinthartig oder mit Stufen ausgebildet ist. Je nach Ausgestaltung des Schlitzes hinsichtlich der Form und/oder der Schlitzbreite kann die Drosselwirkung vorgegeben werden, womit dann auch die Beeinträchtigung der Dichtwirkung im Bereich des Schlitzes konstruktiv beeinflusst werden kann. Unter Umständen ist aber im Rahmen der Erfindung auch eine gewisse Durchströmung des Schlitzes, also eine begrenzte Beeinträchtigung der Dichtwirkung, gewünscht, da damit eine gewisse Durchströmung der Kontaktfläche zwischen dem eigensteifen Gleitring und der Dichtfläche gezielt erzeugt werden kann, wobei diese Durchströmung dann auch dazu dienen kann, abseits des eigensteifen Dichtrings vorhandene Spalte zwischen den beiden Drehdurchführungsteilen zu durchströmen, womit diese von Partikeln gereinigt werden können und/oder der Eintritt von Partikeln vermieden werden kann.

Für einen Vorschlag der Erfindung ist die Steifigkeit der Dichteinheit und insbesondere des Gleitrings derart bemessen, dass der Radius der Dichteinheit oder des Gleitrings mit einer Vergrößerung des in der Dichtwirkungs-Steuerkammer wirkenden Dichtungs-Steuerdrucks elastisch vergrößert werden kann. Infolge dieser Vergrößerung wird die Dichteinheit oder der Gleitring mit einer sich vergrößernden Anpresskraft an die Dichtfläche gepresst, womit gezielt die Dichtwirkung und die Dichtkraft erhöht werden können. Alternativ oder kumulativ kann der Radius der Dichteinheit oder des Gleitrings mit einer Verringerung des in der Dichtwirkungs-Steuerkammer wirkenden Dichtungs-Steuerdrucks elastisch verringert werden. Auf diese Weise kann die Dichtwirkung und die Dichtkraft zwischen der Dichteinheit oder dem Gleitring und der Dichtfläche verringert werden.

Für eine mögliche Ausgestaltung der Fahrzeugrad-Drehdurchführung sind die Dichtwirkungs-Steuerkammer und der Übertrittsbereich pneumatisch miteinander verbunden. Um lediglich ein die Erfindung nicht beschränkendes Beispiel zu nennen, kann ein zu der Dichtwirkungs-Steuerkammer führender Dichtungs-Steuerkanal und der zu dem Übertrittsbereich führende Kanal über eine Verzweigung mit demselben Kanal oder Anschluss des Drehdurchführungsteils verbunden sein. In diesem Fall kann beispielsweise in der Dichtwirkungs-Steuerkammer und dem Übertrittsbereich derselbe Druck anliegen. Möglich ist aber auch, dass mittels eines in einem der genannten Kanäle angeordneten Druckminderers, infolge einer Drosselwirkung u. ä. trotz des Anschlusses an denselben Anschluss oder denselben Kanal in der Dichtwirkungs-Steuerkammer einerseits und dem Übertrittsbereich andererseits unterschiedliche Drücke wirken. Die zuvor erläuterte pneumatische Verbindung der Dichtwirkungs-Steuerkammer und des Übertrittsbereichs kann auf einfache Weise gewährleisten, dass in der Dichtwirkungs-Steuerkammer lediglich dann ein Dichtungs-Steuerdruck erzeugt wird und somit auch eine Erzeugung oder Erhöhung der Anpresskraft der Dichteinheit an die Dichtfläche (und somit eine Reibung und ein Verschleiß auftreten, wenn auch der Übertrittsbereich pneumatisch beaufschlagt ist. Damit wird automatisch die Dichtwirkung erzeugt, wenn diese erforderlich ist, da über den Übertrittsbereich auch ein Arbeitsmedium übertragen werden soll.

Für eine andere Ausgestaltung der Erfindung sind die Dichtungs-Steuerkammer einerseits und der Übertrittsbereich andererseits pneumatisch voneinander in dem Drehdurchführungsteil getrennt. Möglich ist, dass über separate pneumatische Kanäle die Dichtwirkungs-Steuerkammer mit einem Dichtungs-Steueranschluss verbunden ist, während der Übertrittsbereich über Kanäle mit einem anderen Anschluss desselben Drehdurchführungsteils (insbesondere einem Versorgungs-Eingangsanschluss oder eine Steuer-Eingangsanschluss) verbunden ist. Durch diese Ausgestaltung ist es ermöglicht, dass der Dichtungs-Steuerdruck einerseits und der Druck in dem Übertrittsbereich andererseits unabhängig voneinander vorgebbar sind. Es kann somit auch eine separate Vorgabe der Höhe des Dichtungs-Steuerdrucks erfolgen, mit welcher dann die erforderliche Dichtwirkung gewährleistet werden kann, um den Druck in dem Übertrittsbereich ohne zu große Undichtigkeiten zu übertragen.

Möglich ist, dass die Fahrzeugrad-Drehdurchführung über eine Dauerschmierung des Lagers, über welches die Drehdurchführungsteile unmittelbar gegeneinander gelagert sind, verfügt. Ist erforderlich, dass eine turnusgemäße Schmierung des Lagers erfolgt, kann für einen Vorschlag der Erfindung die Fahrzeugrad-Drehdurchführung über einen Schmiermittelanschluss verfügen. Dieser Schmiermittelanschluss ist dann mit dem Lager verbunden, über welches die Drehdurchführungsteile verdrehbar zueinander gelagert sind. Hierbei kann das Lager über einen Zwischenraum zwischen den Drehdurchführungsteilen auch mit den Dichteinheiten verbunden sein. Dabei muss vermieden werden, dass Schmiermittel über die Dichteinheiten zu dem ersten Kanal, dem Übertrittsbereich und/oder dem zweiten Kanal, also dem Zweig des Arbeitsmediums, gelangt. Dies kann bewerkstelligt werden, indem bei pneumatischer Verbindung der Dichtwirkungs-Steuerkammer und des Übertrittsbereichs eine Druckbeaufschlagung sowohl der Dichtwirkungs-Steuerkammer als auch des Übertrittsbereichs erfolgt. Möglich ist aber auch, dass bei pneumatischer Trennung der Dichtwirkungs-Steuerkammer und des Übertrittsbereichs die Kanäle und der Übertrittsbereich nicht druckbeaufschlagt werden und lediglich die Dichtwirkungs-Steuerkammer mit dem Dichtungs-Steuerdruck beaufschlagt wird. Im letztgenannten Fall kann u. U. auch die Höhe des Dichtungs-Steuerdrucks spezifisch so gewählt werden, dass ein Übertritt von Schmiermittel zuverlässig ausgeschlossen ist.

Eine weitere Lösung der der Erfindung zugrundeliegenden Aufgabe stellt eine Fahrzeugrad-Baugruppe dar. Diese verfügt über einen Fahrzeugradträger, beispielsweise einen Achskörper, einen Fahrzeugradhalter u. ä., an dem drehbar ein Fahrzeugrad gehalten ist. Das Fahrzeugrad verfügt über einen Reifen. Die erfindungsgemäße Fahrzeugrad-Baugruppe verfügt des Weiteren über eine Reifenfülleinrichtung, mittels welcher gewährleistet werden soll, dass der Reifen einen vorbestimmten Druck aufweist. Durchaus möglich ist, dass mittels der Reifenfülleinrichtung auch unterschiedliche Drücke in dem Reifen eingestellt werden können. So kann beispielsweise für die Fahrt des Fahrzeugs auf der Straße ein höherer Druck in dem Reifen eingestellt werden als für die Fahrt des Fahrzeugs auf einem Ackerboden. Die im Rahmen der Erfindung eingesetzte Reifenfülleinrichtung verfügt für eine erste Variante über eine Versorgungsleitung. Die Versorgungsleitung geht von dem Fahrzeugradträger aus und ist an einen Versorgungs-Eingangsanschluss des als Stator ausgebildeten Drehdurchführungsteils angeschlossen. Die Versorgungsleitung stellt einen Versorgungsdruck bereit, über den ein Belüften des Reifens, also ein Auffüllen desselben oder eine Druckerhöhung, erfolgen kann. Hierbei kann der Versorgungsdruck permanent bereitgestellt sein oder in Abhängigkeit von der Stellung eines Versorgungsventils, welches beispielsweise an dem Fahrzeugradträger gehalten sein kann. Für eine andere Variante verfügt die Reifenfülleinrichtung über eine Steuerleitung, die an einen Steuer-Eingangsanschluss der Fahrzeugrad-Drehdurchführung angeschlossen ist. Die Steuerleitung geht ebenfalls vom Fahrzeugradträger aus. Über die Steuerleitung kann ein Belüften, Sperren und/oder Entlüften des Reifens gesteuert werden, wobei der Steuerdruck in der Steuerleitung vorzugsweise zur Ansteuerung eines Reifendruckregelventils (insbesondere eines Be- und Entlüftungsventils) verwendet wird, welches stromabwärts der Fahrzeugrad-Drehdurchführung angeordnet ist und mit dem Fahrzeugrad rotiert. Vorzugsweise verfügt die Reifenfülleinrichtung sowohl über eine Versorgungsleitung als auch über eine Steuerleitung, wobei dann mittels des Steuerdruckes in der Steuerleitung auch gesteuert werden kann, ob der Druck in der Versorgungsleitung dem Reifen zugeführt wird, ein Absperren der Versorgungsleitung erfolgt und/oder ein Entlüften des Reifens erfolgt.

Für diesen Vorschlag der Erfindung weist die Reifenfülleinrichtung eine Fahrzeugrad-Drehdurchführung auf, wie diese zuvor beschrieben worden ist. Über die Fahrzeugrad-Drehdurchführung kann dann eine Übertragung des Versorgungsdrucks und/oder des Steuerdrucks erfolgen, in dem die Versorgungsleitung oder die Steuerleitung mit dem ersten Kanal, dem Übertrittsbereich und dem zweiten Kanal verbunden ist.

Insbesondere ist für diese Ausgestaltung das Fahrzeugrad über ein Radlager an dem Fahrzeugradträger gehalten. Die Fahrzeugrad-Drehdurchführung kann dann dem Kraftfluss von dem Fahrzeugrad über das Radlager zu dem Fahrzeugradträger parallel geschaltet sein, wobei die Fahrzeugrad-Drehdurchführung dabei beabstandet und separat von dem Radlager ausgebildet sein kann. Möglich ist beispielsweise, dass das zweite Drehdurchführungsteil an dem Fahrzeugrad befestigt ist, so dass dieses mit dem Fahrzeugrad rotiert und als Rotor ausgebildet ist. Hingegen ist das erste Drehdurchführungsteil über die angeschlossenen Leitungen und über eine Drehmomentenstütze mit dem Fahrzeugradträger verbunden, womit dieses als Stator ausgebildet ist. Die Drehdurchführung ist in diesem Fall mit minimalen Kräften beaufschlagt, aber stellt den erforderlichen Dreh-Freiheitsgrad und die pneumatische Übertragung bereit. Mittels der Drehmomentenstütze kann eine Aufnahme der Kraft für die Behinderung der Rotation des ersten Drehdurchführungsteils derart erfolgen, dass diese Kraft nicht die angeschlossenen Leitungen beansprucht.

Eine weitere Lösung der der Erfindung zugrundeliegenden Aufgabe stellt eine selbstfahrende Arbeitsmaschine dar, in welcher eine Fahrzeugrad-Baugruppe der zuvor erläuterten Art Einsatz findet. Möglich ist hierbei, dass an mehreren oder sämtlichen Fahrzeugrädern der selbstfahrenden Arbeitsmaschine eine Fahrzeugrad-Baugruppe der zuvor erläuterten Art Einsatz findet. Die selbstfahrende Arbeitsmaschine ist dabei als landwirtschaftliche Arbeitsmaschine, Traktor, Erntemaschine u. ä. ausgebildet.

Eine weitere Lösung der der Erfindung zugrundeliegenden Aufgabe stellt ein Verfahren zum Betrieb einer Fahrzeugrad-Drehdurchführung dar, wobei es sich insbesondere um eine Fahrzeugrad-Drehdurchführung der zuvor erläuterten Art handelt. Ein derartiges Verfahren beinhaltet die folgenden Verfahrensschritte:
Zunächst erfolgt eine Beaufschlagung eines Steuer-Eingangsanschlusses, insbesondere des als Stator ausgebildeten Drehdurchführungsteils, mit einem Steuerdruck. Alternativ kann ein Versorgungs-Eingangsanschluss des als Stator ausgebildeten Drehdurchführungsteils mit einem Versorgungsdruck beaufschlagt werden.

Infolge dieser Beaufschlagung erfolgt auch eine Beaufschlagung einer Dichtwirkungs-Steuerkammer mit einem Dichtungs-Steuerdruck. Hierbei kann der Dichtungs-Steuerdruck dem Steuerdruck an dem Steueranschluss oder dem Versorgungsdruck an dem Versorgungsanschluss entsprechen. Möglich ist aber auch, dass der Dichtungs-Steuerdruck separat über einen weiteren Dichtungs-Steueranschluss bereitgestellt wird. Auf diese Weise wird dann eine Dichtkraft erzeugt, mittels welcher eine Dichtwirkung mindestens einer Dichteinheit herbeigeführt wird oder eine bereits vorhandene Dichtwirkung erhöht wird.

Ist hingegen eine Dichtwirkung der Dichteinheit überhaupt nicht mehr erforderlich oder kann diese reduziert werden, wird in einem weiteren Verfahrensschritt der Dichtungs-Steuerdruck in der Dichtwirkungs-Steuerkammer reduziert. Dies hat eine Reduzierung der Dichtkraft und damit eine Reduzierung der Dichtwirkung mindestens einer Dichteinheit zur Folge. Somit kann die Dichtwirkung reduziert oder vollständig beseitigt werden, wenn mittels der Fahrzeugrad-Drehdurchführung im Bereich des Übertragungskanals kein Versorgungsdruck oder Steuerdruck übertragen werden soll. Hierdurch kann die Reibung und kann der Verschleiß der Dichteinheit der Fahrzeugrad-Drehdurchführung reduziert werden.

Für eine weitere Ausgestaltung des erfindungsgemäßen Verfahrens werden gleichzeitig ein Schmiermittelanschluss mit einem Schmiermittel für ein Lager der Fahrzeugrad-Drehdurchführung und ein Dichtungs-Steueranschluss mit einem Dichtungs-Steuerdruck beaufschlagt. Durch diese gleichzeitige Beaufschlagung kann bei dem Schmieren des Lagers über den Schmiermittelanschluss vermieden werden, dass das Schmiermittel in den Übertrittsbereich übertritt. Unter Umständen kann der Dichtungs-Steuerdruck während einer derartigen Schmierung des Lagers auch höher gewählt werden als dies der Fall ist, wenn keine Schmierung erfolgt, aber eine Übertragung eines Versorgungsdrucks oder eines Steuerdrucks über die Fahrzeugrad-Drehdurchführung erfolgen soll.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch eine Reifenfülleinrichtung 1 mit einer Fahrzeugrad-Drehdurchführung.
- **Fig. 2**: zeigt in einem Längshalbschnitt eine Ausführungsform einer Fahrzeugrad-Drehdurchführung.
- **Fig. 3 und 4**: zeigen eine weitere Ausführungsform einer Fahrzeugrad-Drehdurchführung, wobei Fig. 3 einen Halblängsschnitt für einen Umfangswinkel zeigt, in welchem ein Steuer-Eingangsanschluss angeordnet ist, während Fig. 4 einen Halblängsschnitt für einen Umfangswinkel zeigt, in welchem ein Dichtungs-Steueranschluss angeordnet ist.
- **Fig. 5**: zeigt schematisch eine weitere Ausgestaltung einer Reifenfülleinrichtung mit einer Fahrzeugrad-Drehdurchführung, die beispielsweise gemäß Fig. 3 und 4 ausgebildet sein kann.
- **Fig. 6**: zeigt in einem Halblängsschnitt eine Fahrzeugrad-Drehdurchführung 11, die grundsätzlich entsprechend dem Ausführungsbeispiel in Fig. 3 und 4 ausgebildet sein kann, aber ergänzend einen Schmiermittelkreislauf aufweist.
- **Fig. 7 und 8**: zeigen eine Fahrzeugrad-Drehdurchführung in einer räumlichen Vorderansicht und Rückansicht.
- **Fig. 9**: zeigt ein Teilumfangssegment eines ersten Drehdurchführungsteils einer Fahrzeugrad-Drehdurchführung mit Dichteinheiten, einem Kanal und Wälzkörpern eines Lagers zur Lagerung der Drehdurchführungsteile.
- **Fig. 10**: zeigt schematisch eine Fahrzeugrad-Baugruppe in einem Längsschnitt.
- **Fig. 11**: zeigt die Fahrzeugrad-Baugruppe gemäß Fig. 10 in einer Vorderansicht.
- **Fig. 12**: zeigt einen Teilquerschnitt der Fahrzeugrad-Baugruppe gemäß Fig. 10 und 11 bei Schnittführung durch den Fahrzeugradträger und Blickrichtung von hinten.
- **Fig. 13**: zeigt einen Teillängsschnitt durch die Fahrzeugrad-Baugruppe gemäß Fig. 10 bis 12, wobei hier die Schnittführung um 90° verdreht ist gegenüber der Schnittführung in Fig. 10 und die Fahrzeugrad-Drehdurchführung nicht geschnitten dargestellt ist.

### FIGURENBESCHREIBUNG

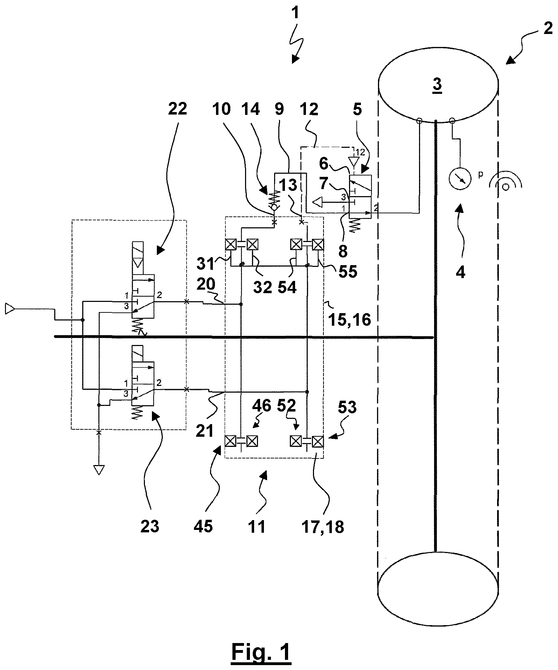

**Fig. 1** zeigt schematisch eine pneumatische Reifenfülleinrichtung 1 für ein Fahrzeugrad 2 mit einem Reifen 3, dessen Befüllung mittels der Reifenfülleinrichtung 1 gesteuert oder geregelt wird. Zu diesem Zweck verfügt das Fahrzeugrad 2 über einen Drucksensor 4, der den Druck in dem Reifen 3 erfasst. Das Messsignal des Drucksensors 4 wird vorzugsweise drahtlos an eine hier nicht dargestellte Steuereinheit übertragen. Mit dem Fahrzeugrad 2 rotiert ein Reifendruckregelventil 5, welches an dem Fahrzeugrad 2 befestigt ist und mit diesem rotiert. Das Reifendruckregelventil 5 verfügt über einen pneumatischen Reifendruck-Steueranschluss 6, einen Reifendruck-Entlüftungsanschluss 7 und Reifendruck-Versorgungsanschluss 8. Der Reifendruck-Versorgungsanschluss 8 ist über eine Reifendruck-Versorgungsleitung 9 mit einem Versorgungs-Ausgangsanschluss 10 einer Fahrzeugrad-Drehdurchführung 11 verbunden. Entsprechend ist der Reifendruck-Steueranschluss 6 über eine Reifendruck-Steuerleitung 12 mit einem Steuer-Ausgangsanschluss 13 der Fahrzeugrad-Drehdurchführung 11 verbunden. In der Reifendruck-Versorgungsleitung 9 ist ein Rückschlagventil 14 angeordnet, welches eine Strömung von dem Versorgungs-Ausgangsanschluss 10 der Fahrzeugrad-Drehdurchführung 11 in Richtung des Reifendruck-Versorgungsanschlusses 8 zulässt, aber eine entgegengesetzte Strömung sperrt.

Die Fahrzeugrad-Drehdurchführung 11 verfügt über ein erstes Drehdurchführungsteil 15, welches als Stator 16 ausgebildet ist. Gegenüber dem ersten Drehdurchführungsteil 15 ist ein als Rotor 17 ausgebildetes zweites Drehdurchführungsteil 18 mittels eines Lagers 19 drehbar gelagert. Der Versorgungs-Ausgangsanschluss 10 und der Steuer-Ausgangsanschluss 13 sind an dem zweiten Drehdurchführungsteil 18 vorgesehen. Hingegen verfügt das erste Drehdurchführungsteil 15 über einen Versorgungs-Eingangsanschluss 20 und einen Steuer-Eingangsanschluss 21. Die Fahrzeugrad-Drehdurchführung 11 ermöglicht eine vollständig oder weitestgehend abgedichtete Übertragung des Versorgungsdrucks an dem Versorgungs-Eingangsanschluss 20 zu dem Versorgungs-Ausgangsanschluss 10 sowie des Steuerdrucks an dem Steuer-Eingangsanschluss 21 an den Steuer-Ausgangsanschluss 13 trotz der rotatorischen Relativbewegung zwischen den Drehdurchführungsteilen 15, 18.

Die Vorgabe des Drucks an dem Versorgungs-Eingangsanschluss 20 (und damit an dem Reifendruck-Versorgungsanschluss 8 des Reifendruckregelventils 5) erfolgt über ein Versorgungsventil 22. In entsprechender Weise erfolgt die Vorgabe des Steuerdrucks an dem Steuer-Eingangsanschluss 21 (und damit an dem Steueranschluss 6 des Reifendruckregelventils 5) über ein Steuerventil 23.

Für das dargestellte Ausführungsbeispiel sind das Versorgungsventil 22 und das Steuerventil 23 als elektrisch angesteuerte oder elektropneumatisch vorgesteuerte 3/2-Wegeventile ausgebildet, die jeweils eine Belüftungsstellung, in welcher ein Versorgungsdruck bzw. ein Steuerdruck erzeugt wird, sowie eine Entlüftungsstellung, in welcher der Versorgungs-Eingangsanschluss 20 bzw. der Steuer-Eingangsanschluss 21 entlüftet ist, aufweisen.

Die Ansteuerung des Versorgungsventils 22 und des Steuerventils 23 erfolgt über eine Steuereinheit, wobei es sich vorzugsweise um die Steuereinheit handelt, an welche auch das Messsignal des Drucksensors 4 übertragen wird.

Hinsichtlich weiterer Informationen und Ausgestaltungen der Reifenfülleinrichtung 1, insbesondere hinsichtlich
- der Bereitstellung eines eingangsseitigen Drucks für das Versorgungsventil 22 und das Steuerventil 23 mit einem Hochdruck-Kreis und einem Niederdruck-Kreis unter Verwendung einer Druckerhöhungseinrichtung wie einer Pumpe oder eines Druckboosters,
- des Einsatzes von Druckbehältern in einem Hochdruckpfad und/oder einem Niederdruckpfad,
- der Überbrückung der Druckerhöhungseinrichtung über eine Bypassleitung,
- einer Druckluftversorgung mehrere Reifen über eine Reifendruckregeleinrichtung u. ä. wird auf die nicht vorveröffentlichte europäische Patentanmeldung EP 19 170 638.1 der Anmelderin verwiesen, deren diesbezügliche Offenbarung zum Gegenstand der vorliegenden Anmeldung gemacht wird.

Der Betrieb der Reifenfülleinrichtung 1 gemäß Fig. 1 ist vorzugsweise wie folgt:
Soll der Reifen 3 befüllt werden oder der Druck in dem Reifen 3 erhöht werden, wird das Versorgungsventil 22 in die Belüftungsstellung gesteuert, während das Steuerventil 23 ohne elektrische Beaufschlagung infolge der Wirkung der Feder in der Entlüftungsstellung bleibt. Der von dem Versorgungsventil 22 ausgesteuerte Versorgungsdruck wird über die Fahrzeugrad-Drehdurchführung 11 und über das in diese Richtung öffnende Rückschlagventil 14 an den Reifendruck-Versorgungsanschluss 8 des Reifendruckregelventils 5 übertragen. Ohne in der Reifendruck-Steuerleitung 12 anliegenden Steuerdruck befindet sich das Reifendruckregelventil 5 infolge der Feder desselben in der Belüftungsstellung, so dass über das Reifendruckregelventil 5 die Druckluft zu dem Reifen 3 gelangen kann.

Ist der gewünschte Druck in dem Reifen 3 erreicht oder soll der Druck gehalten werden, wird das Versorgungsventil 22 in die Belüftungsstellung überführt, während das Steuerventil 23 die Entlüftungsstellung 23 einnimmt oder beibehält. Da die Reifendruck-Steuerleitung 12 nicht druckbeaufschlagt ist, nimmt das Reifendruckregelventil 5 die Belüftungsstellung ein bzw. bleibt in dieser. Dies hat zur Folge, dass der Druck in dem Reifen 3 an dem Ausgang des Rückschlagventils 14 anliegt, während der Eingang des Rückschlagventils 14 drucklos ist, da das Versorgungsventil 22 in der Entlüftungsstellung ist. Das Rückschlagventil 14 sperrt somit den Reifen 3 ab, so dass dessen Druck unverändert bleibt. Vorteilhaft hieran ist, dass die Fahrzeugrad-Drehdurchführung 11 in diesem Zustand nicht druckbeaufschlagt ist, was zur Folge hat, dass die Dichteinheiten 45, 46, 52, 53, über die die Drehdurchführungsteile 15, 18 gegeneinander abgedichtet sind, nicht mit diesen Drücken beaufschlagt sind, womit die Reibung und der Verschleiß reduziert sind.

Soll der Druck in dem Reifen 3 verringert werden, wird das Versorgungsventil 22 in die Entlüftungsstellung überführt oder verbleibt in dieser, während das Steuerventil 23 in die Belüftungsstellung überführt wird oder in dieser verbleibt. Dies hat zur Folge, dass über die Reifendruck-Steuerleitung 12 der Reifendruck-Steueranschluss 6 druckbeaufschlagt wird, so dass das Reifendruckregelventil 5 in die Entlüftungsstellung umgesteuert wird. In der Entlüftungsstellung des Reifendruckregelventils 5 wird der Reifen 3 dann entlüftet.

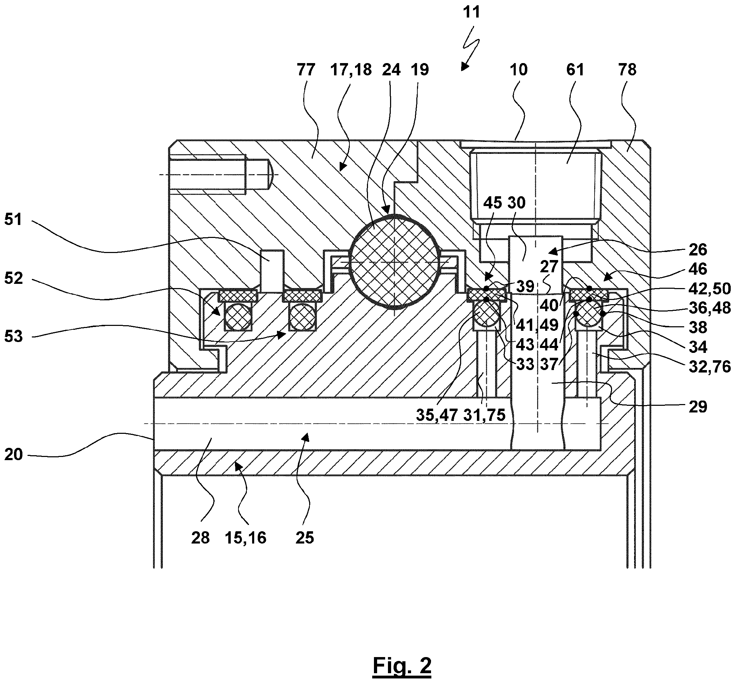

Während Fig. 1 die Fahrzeugrad-Drehdurchführung 1 stark schematisiert zeigt, ist in Fig. 2 eine mögliche Ausgestaltung einer Fahrzeugrad-Drehdurchführung 11 in einem Halblängsschnitt und in größerem konstruktivem Detail dargestellt.

Die Fahrzeugrad-Drehdurchführung 11 ist insgesamt ringartig ausgebildet, wobei die Kontur des Rings in dem dargestellten Halblängsschnitt bestimmt wird durch die Außenkonturen der Drehdurchführungsteile 15, 18. Hierbei ist aus Montagegründen das zweite Drehdurchführungsteil 18 zweiteilig ausgebildet. Eine eine Drehung ermöglichende Abstützung des zweiten Drehdurchführungsteils 18 an dem ersten Drehdurchführungsteil 15 ist durch ein mittiges Lager 19 ermöglicht, wobei an den Wälzkörpern 24 des Lagers 19 einerseits die außenliegende Mantelfläche des Drehdurchführungsteils 15 sowie die beiden Teile des Drehdurchführungsteils 18 mit ihren Innenflächen bzw. ihren einander zugewandten Endbereichen abgestützt sind. Vorzugsweise verfügt das Lager 19 über einen Lagerkäfig für die Wälzkörper 24.

**Fig. 2** zeigt die Fahrzeugrad-Drehdurchführung 11 im Bereich des Halblängsschnittes, der die Übertragung des Versorgungsdrucks zeigt. Zu diesem Zweck verfügt das Drehdurchführungsteil 15 über einen ersten Kanal 25. Das zweite Drehdurchführungsteil 18 verfügt über einen zweiten Kanal 26. Im Übergangsbereich von dem ersten Kanal 25 des ersten Drehdurchführungsteils 15 zu dem zweiten Kanal 26 des zweiten Drehdurchführungsteils 18 ist ein Übertrittsbereich 27 gebildet. Der erste Kanal 25 geht von dem Versorgungs-Eingangsanschluss 20 aus. Der zweite Kanal 26 führt zu dem Versorgungs-Ausgangsanschluss 10.

Für das dargestellte Ausführungsbeispiel verfügt der erste Kanal 25 über eine Axialbohrung 28, die von dem Versorgungs-Eingangsanschluss 20 ausgeht und als Sacklochbohrung ausgebildet ist, und eine von der Axialbohrung 28 ausgehende Stichbohrung 29, die bis zur Mantelfläche des Drehdurchführungsteils 15 führt.

Der zweite Kanal 26 geht von einer in Umfangsrichtung umlaufenden Umfangsnut 30 über in einen Anschlussabschnitt 61 mit erweitertem Querschnitt, über welchen der Versorgungs-Ausgangsanschluss 10 bereitgestellt wird.

Von der Axialbohrung 28 (oder auch der Stichbohrung 29) zweigt auf beiden Seiten der Stichbohrung 29 jeweils ein Zweigleitungskanal 31, 32 ab. Der Zweigleitungskanal 31, 32 führt jeweils zu einer Dichtwirkungs-Steuerkammer 33, 34, die sich lediglich in mindestens einem Teilumfangsbereich erstrecken kann, sich aber vorzugsweise über den gesamten Umfang erstreckt und als Umfangsnut ausgebildet ist. Die Zweigleitungskanäle 31, 32 bilden damit Dichtungs-Steuerkanäle 75, 76. Die Dichtwirkungs-Steuerkammern 33, 34 und die zugeordneten Dichtungs-Steuerkanäle 75, 76 sind in axialer Richtung beidseits der Stichbohrung 29 und des Übertrittsbereichs 27 angeordnet. In den Dichtwirkungs-Steuerkammern 33, 34 ist jeweils ein Dichtelement 35, 36 angeordnet. Die Dichtelemente 35, 36 sind derart vorgespannt in die Dichtwirkungs-Steuerkammern 33, 34 eingesetzt, dass diese mittels axialer Dichtflächen 37, 38 (die in Fig. 2 nur für das Dichtelement 36 dargestellt sind) an die begrenzenden Wandungen der Dichtwirkungs-Steuerkammern 33, 34 angepresst werden. Die Dichtelemente 35, 36 bilden eine Art (Ring-)Kolben in den Dichtwirkungs-Steuerkammern 33, 34, so dass diese durch Druckbeaufschlagung der Dichtwirkungs-Steuerkammern 33, 34 kolbenartig in radialer Richtung beaufschlagt werden können und in diese Richtung verschieblich oder verformbar sind.

Zwischen den Dichtelementen 35, 36 und zylindrischen Dichtflächen 39, 40, die Innenflächen des zweiten Drehdurchführungsteils 18 sind, sind Dichtelemente 41, 42 gefangen und (zumindest bei anliegendem Versorgungsdruck an dem Versorgungs-Eingangsanschluss 20) verspannt. Bei anliegendem Versorgungsdruck an dem Versorgungs-Eingangsanschluss 20 und damit in den Dichtwirkungs-Steuerkammern 33, 34 werden die Dichtelemente 35, 36 radial nach außen gegen die Dichtelemente 41, 42 gedrückt, womit sich zwischen den Dichtelementen 35, 41 bzw. 36, 42 Dichtflächen 43, 44 ausbilden.

Die Paare der Dichtelemente 35, 41 bzw. 36, 42 bilden jeweils Dichteinheiten 45, 46. Die Dichteinheiten 45, 46 erstrecken sich ringartig in Umfangsrichtung um die Rotationsachse der Fahrzeugrad-Drehdurchführung 11. Die Dichtelemente 35, 36 sind vorzugsweise als O-Ringe 47, 48 ausgebildet. Hingegen können die Dichtelemente 41, 42 als eigensteife Gleitringe 49, 50 oder Verschleißringe ausgebildet sein.

Versorgungs-Druckluft kann von dem Versorgungs-Eingangsanschluss über den ersten Kanal 25, den Übertrittsbereich 27, den zweiten Kanal 26 zu dem Versorgungs-Ausgangsanschluss 10 gelangen, wobei trotz der relativen Verdrehung des Drehdurchführungsteils 18 gegenüber dem Drehdurchführungsteil 15 durch die Dichteinheiten 45, 46 eine Abdichtung gewährleistet ist.

In dem Halblängsschnitt gemäß Fig. 2 ist auch eine Umfangsnut 51 mit zugeordneten Dichteinheiten 52, 53 zu erkennen, die hier axial auf der anderen Seite des Lagers 19 angeordnet sind. Die Umfangsnut 51 ist auf in Fig. 2 nicht dargestellte Weise in einem in Umfangsrichtung versetzten Teillängsschnitt verbunden mit dem Steuer-Ausgangsanschluss 13 über einen entsprechenden zweiten Kanal des Drehdurchführungsteils 18, während in diesem in Umfangsrichtung versetzten Halblängsschnitt ein erster Kanal des Drehdurchführungsteils 15 mit dem Steuer-Eingangsanschluss 21 verbunden ist. Auf diese Weise kann mittels der Fahrzeugrad-Drehdurchführung 11 auch eine Übertragung des Steuerdrucks erfolgen.

Diese Ausgestaltung der Fahrzeugrad-Drehdurchführung 11 ist in Fig. 1 symbolartig dargestellt mit den Dichteinheiten 45, 46, 52, 53, den Zweigleitungskanälen 31, 32 sowie den den Dichteinheiten 52, 53 zugeordneten Zweigleitungskanälen 54, 55.

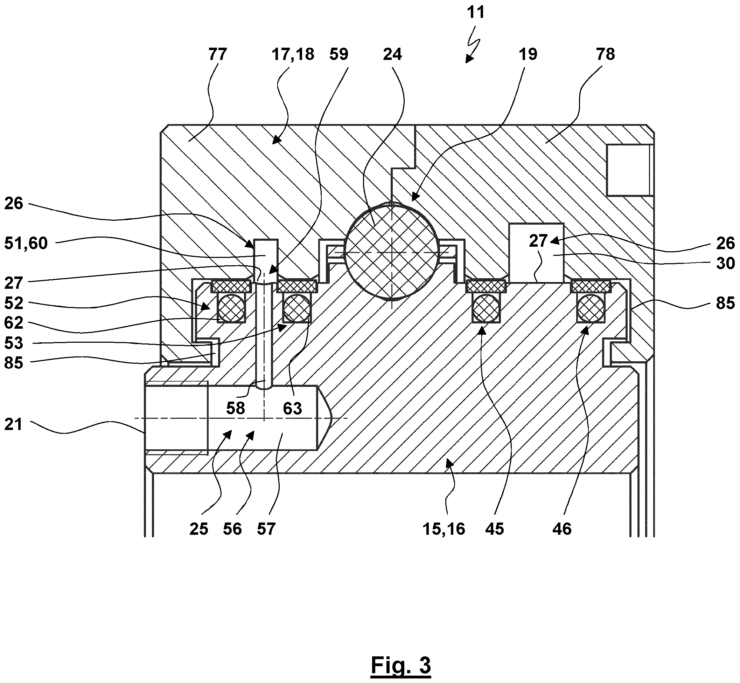

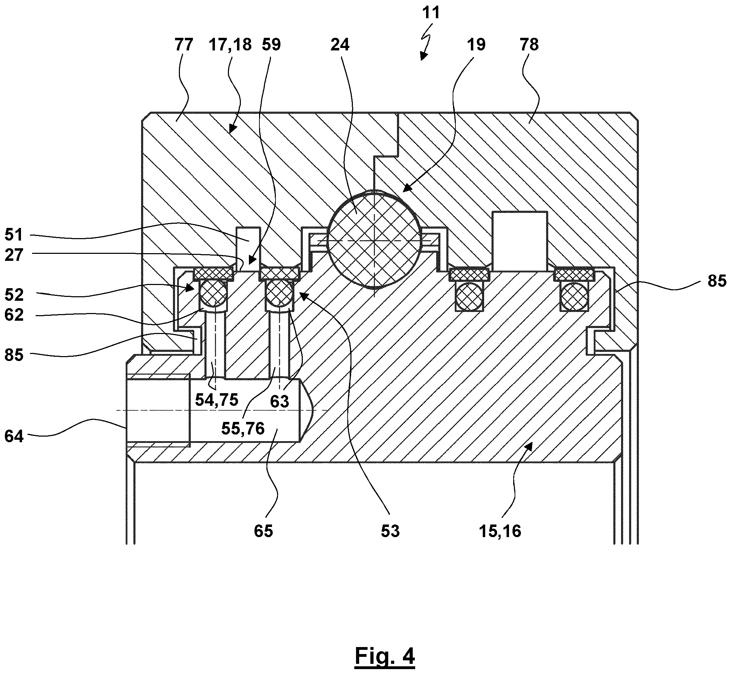

In **Fig. 3** **und** **4** ist für eine abgewandelte Ausgestaltung die Fahrzeugrad-Drehdurchführung 11 mit in unterschiedlichen Umfangswinkeln erzeugten Halblängsschnitten dargestellt. In dem Halblängsschnitt gemäß Fig. 3 ist zu erkennen, dass (grundsätzlich wie zuvor für Fig. 2 erläutert) ein erster Kanal 56 in Form einer sacklochförmigen Axialbohrung 57, die von dem Steuer-Eingangsanschluss 21 ausgeht, und einer Stichbohrung 58 gebildet ist. Es erfolgt eine Übertragung über einen Übertrittsbereich 59 zu dem zweiten Kanal 60, der mit der Umfangsnut 51 gebildet ist und (in einem hier nicht dargestellten Halblängsschnitt) über einen Anschlussabschnitt 61 mit dem Steuer-Ausgangsanschluss 13 verbunden ist. Zu erkennen ist in Fig. 3 auch die Abdichtung über die beiden Dichteinheiten 52, 53. Hierbei werden die den Dichteinheiten 52, 53 zugeordneten Dichtwirkungs-Steuerkammern 62, 63 aber nicht mit dem Druck an dem Steuer-Eingangsanschluss 21 beaufschlagt. Vielmehr ist in dem Halblängsschnitt, der in Fig. 4 abgebildet ist, ein zusätzlicher Dichtungs-Steueranschluss 64 mit zugeordneter Axialbohrung 65 und hiervon abzweigenden, zu den Dichtwirkungs-Steuerkammern 62, 63 führenden Zweigleitungskanälen 54, 55 vorhanden. Über ein Dichtungs-Steuerventil 68 kann ein Dichtungs-Steuerdruck für den Dichtungs-Steueranschluss 64 und damit für die Beaufschlagung der Dichtwirkungs-Steuerkammern 62, 63 erzeugt werden, so dass die Dichtkraft der Dichteinheiten 52, 53 unabhängig von dem übertragenen Steuerdruck, der an dem Steuer-Eingangsanschluss 21 anliegt, vorgegeben werden kann.

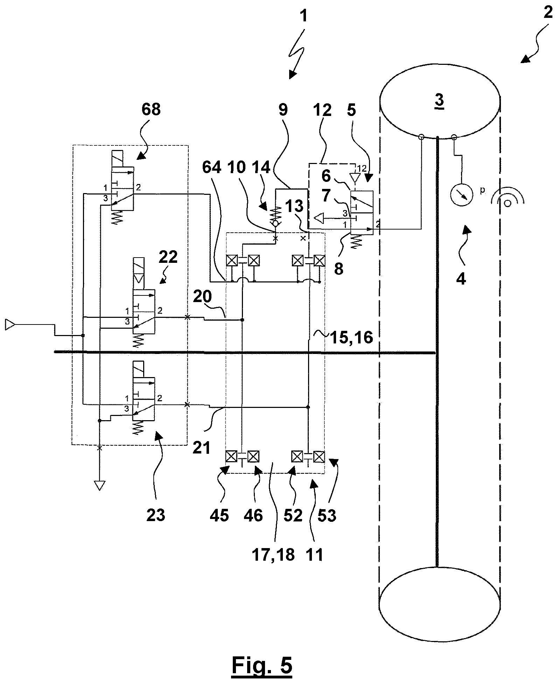

In **Fig. 5** ist grundsätzlich eine Reifendruckfüllanlage 1 gemäß Fig. 1 dargestellt. Allerdings entspricht hier der Dichtungs-Steuerdruck nicht dem Druck, der über die Übertrittsquerschnitte übertragen werden soll und der in Fig. 1 durch das Versorgungsventil 22 und das Steuerventil 23 vorgegeben wird. Vielmehr ist hier ein zusätzliches Dichtungs-Steuerventil 68 vorhanden. Das Dichtungs-Steuerventil 68 wird elektronisch angesteuert oder elektropneumatisch vorgesteuert und ist als 3/2-Wegeventil ausgebildet mit einer Belüftungsstellung und einer Entlüftungsstellung. Der von dem Dichtungs-Steuerventil 68 ausgesteuerte Druck wird in diesem Fall einem Dichtungs-Steueranschluss 64 zugeführt. Von dem Dichtungs-Steueranschluss 64 gelangt dann der Dichtungs-Steuerdruck zu den Dichtwirkungs-Steuerkammern der Dichteinheiten 45, 46, 52, 53. Somit kann die Steuerung der Dichtwirkung und der Anpresskraft der Dichteinheiten 45, 46, 52, 53 unabhängig von der Ansteuerung des Versorgungsventils 22 und des Steuerventils 23 erfolgen.

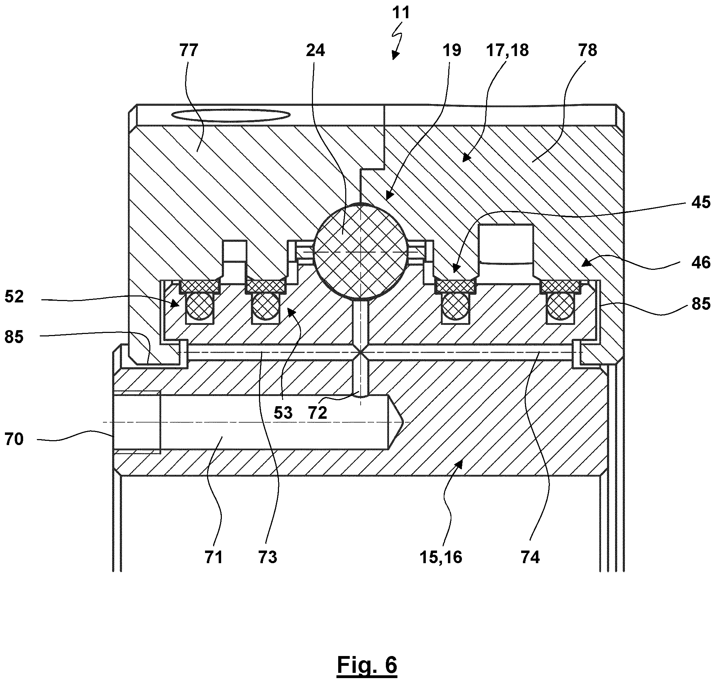

**Fig. 6** zeigt die optionale Ausstattung des Drehdurchführungsteils 15 mit einem Schmiermittelanschluss 70. Von dem Schmiermittelanschluss 70 kann ein Schmiermittel über eine Axialbohrung 71 und eine radiale Stichbohrung 72 zu dem Lager 19 gelangen. Optional möglich ist, dass von der Stichbohrung 72 in beide axiale Richtungen axiale Stichbohrungen 73, 74 abzweigen. Über die Stichbohrungen 73, 74 kann das Schmiermittel auch zusätzlichen Lauf- oder Lagerflächen oder Zwischenräumen zwischen den Drehdurchführungsteilen 15, 18 zugeführt werden. Vorzugsweise findet eine derartige Schmiermittelversorgung gemäß Fig. 6 Einsatz zusammen mit einer Reifenfülleinrichtung 1 gemäß Fig. 5, bei der die Erzeugung eines Dichtungs-Steuerdrucks separat über ein Dichtungs-Steuerventil 68 erfolgt. Soll dann eine Schmierung der Fahrzeugrad-Drehdurchführung 11 durch Beaufschlagung des Schmiermittelanschlusses 70 mit dem Schmiermittel erfolgen, kann während der Schmierung eine Druckbeaufschlagung mit dem Dichtungs-Steuerdruck über das Dichtungs-Steuerventil 68 erfolgen, womit ein Übertritt von Schmiermittel über die Dichtungseinheiten 45, 46, 52, 53 zu dem Übertrittsbereich 27 vermieden werden kann.

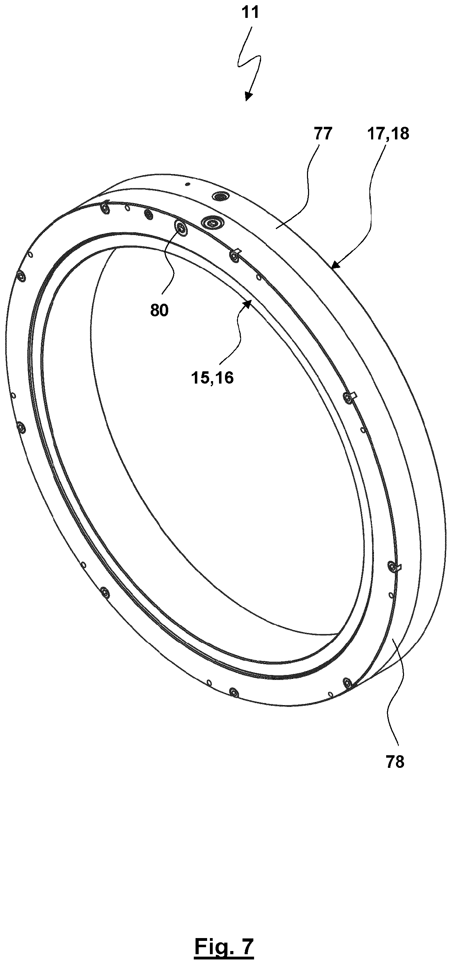

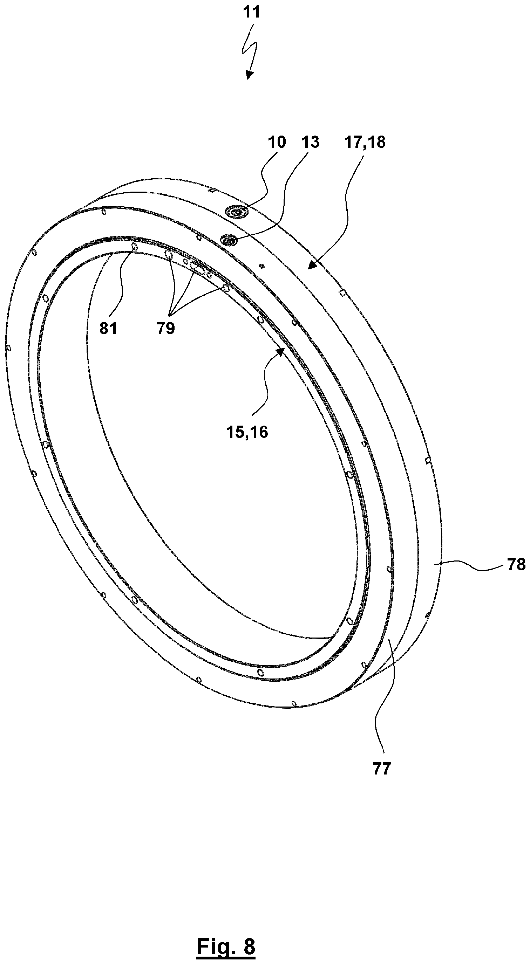

**Fig. 7** **und** **8** zeigen die Fahrzeugrad-Drehdurchführung 11 in einer räumlichen Vorder- und Rückansicht. Zu erkennen sind hier die Teilringe 77, 78 des Drehdurchführungsteils 18 und das Drehdurchführungsteil 15, der Versorgungs-Ausgangsanschluss 10, der Steuer-Ausgangsanschluss 13 und Anschlüsse 79 des ersten Drehdurchführungsteils 15, bei denen es sich bspw. um einen Versorgungs-Eingangsanschluss 20, einen Steuer-Eingangsanschluss 21 und/oder einen Dichtungs-Steueranschluss 64 handeln kann. Möglich ist, dass die ausgangsseitigen Anschlüsse an der Mantelfläche des zweiten Drehdurchführungsteils 18 vorgesehen sind. Alternativ oder kumulativ können auch an einer axialen Stirnseite des zweiten Drehdurchführungsteils 18 Anschlüsse 80 vorgesehen sein, wobei dieser mindestens eine Anschluss 80 bspw. ein Versorgungs-Ausgangsanschluss 10 und/oder ein Steuer-Ausgangsanschluss 13 sein kann. Des Weiteren kann an dem ersten Drehdurchführungsteil 15 ein Befestigungsabschnitt 81, insbesondere eine Befestigungsbohrung, vorgesehen sein.

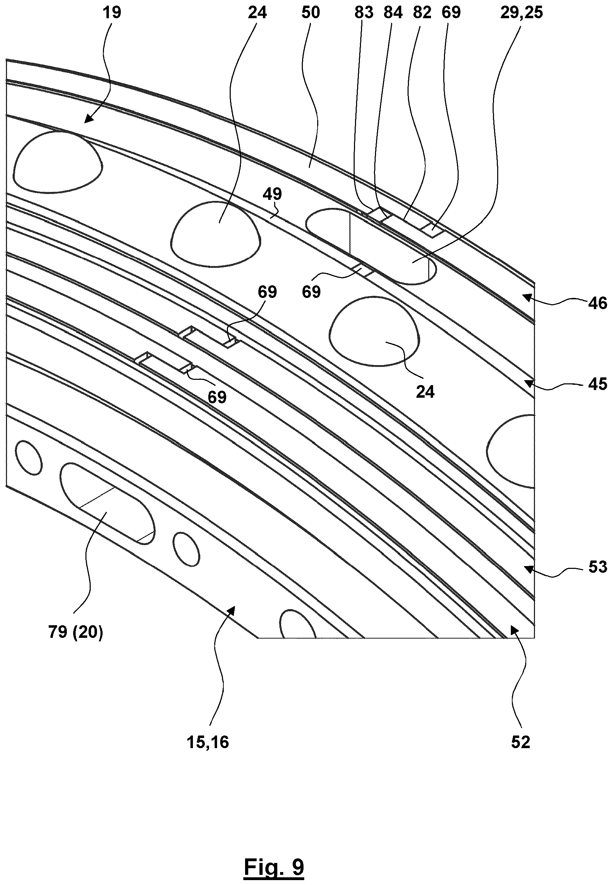

**Fig. 9** zeigt in einer räumlichen Absicht einen Teilumfangsabschnitt des Drehdurchführungsteils 15 mit den Wälzkörpern 24 des Lagers 19 und den Paaren der Dichteinheiten 52, 53 sowie 45, 46. Hierbei befindet sich die Stichbohrung 29 des ersten Kanals 25 für die Übertragung des Versorgungsdrucks in dem dargestellten Umfangsabschnitt, während die Stichbohrung 58 des ersten Kanals 25 für den Steuerdruck, der sich zwischen den Dichteinheiten 52, 53 befindet, nicht in dem dargestellten Umfangsabschnitt angeordnet ist.

Zu erkennen ist in Fig. 9, dass die Dichteinheiten 45, 46, 52, 53, nämlich die als Gleitringe 49, 50 ausgebildeten Dichtelemente 41, 42, jeweils einen Schlitz 69 aufweisen. Für das dargestellte Ausführungsbeispiel sind die Schlitze 69 nicht geradlinig ausgebildet, sondern diese sind vielmehr treppenförmig ausgebildet, wobei Querflächen 82 einen ersten Abstand aufweisen oder unmittelbar unter Ermöglichung einer Gleitbewegung aneinander anliegen, während Stirnflächen 83, 84, deren Flächennormale in Umfangsrichtung orientiert sind, einen zweiten Abstand aufweisen, der größer ist als der erste Abstand. Dieser zweite Abstand ist abhängig von der elastischen Aufweitung der Gleitringe 49, 50. Durch die Abstände der Querflächen 82 und der Stirnflächen 83, 84 kann eine Drosselwirkung für einen Übertritt von Druckluft vorgegeben werden. Durch den Schlitz 69 kann ein Leckagestrom die Dichteinheiten 45, 46, 52, 53 passieren, der erwünscht sein kann, um einen (Führungs-)Spalt 85, der zwischen den Drehdurchführungsteilen 15, 18 gebildet ist, zu durchströmen. Diese Durchströmung des Spalts 85 kann dazu beitragen, Partikel aus dem Spalt 85 in die Umgebung abzuführen und ein Eintritt von Partikeln oder Verunreinigungen in den Spalt 85 zu vermeiden. Hierbei kann der Spalt 85 auch als eine Art Labyrinthspalt ausgebildet sein.

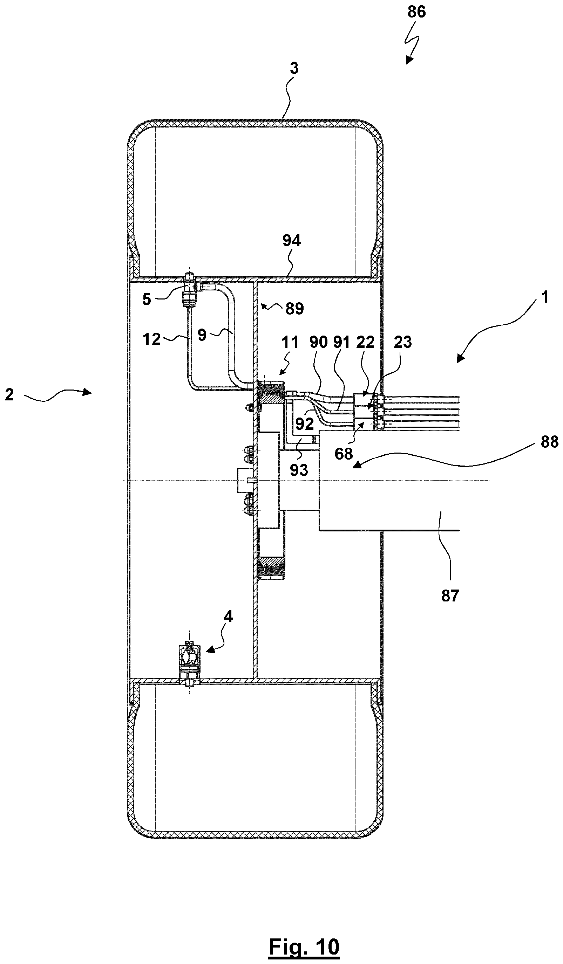

**Fig. 10** zeigt in einem Längsschnitt eine Fahrzeugrad-Baugruppe 86. Die Fahrzeugrad-Baugruppe 86 verfügt über einen Fahrzeugrad-Träger 87. An dem Fahrzeugrad-Träger 87 ist über ein nicht im Detail dargestelltes Radlager 88 das Fahrzeugrad 2 so gelagert, dass über das Radlager 88 die Radlast des Fahrzeugrads 2 abgestützt ist. Das Fahrzeugrad 2 verfügt über eine Felge 89. An dem Fahrzeugrad-Träger 87 sind das Versorgungsventil 22, das Steuerventil 23 und das Dichtungs-Steuerventil 68 gehalten, von denen eine Versorgungsleitung 90 eine Steuerleitung 91 und eine Dichtungs-Steuerleitung 92 ausgehen. Die Versorgungsleitung 90 ist verbunden mit dem Versorgungs-Eingangsanschluss 20 der Fahrzeugrad-Drehdurchführung 11. Die Steuerleitung 91 ist verbunden mit dem Steuer-Eingangsanschluss 21 der Fahrzeugrad-Drehdurchführung 11. Die Dichtungs-Steuerleitung 92 ist verbunden mit dem Dichtungs-Steueranschluss 64 der Fahrzeugrad-Drehdurchführung 11.

Das zweite Drehdurchführungsteil 18 ist befestigt an der Felge 89. Hingegen stützt sich das erste Drehdurchführungsteil 15 über eine Drehmomentenstütze 93 an dem Fahrzeugradträger 87 ab. Hierbei ist der dem Fahrzeugradträger 87 abgewandte Endbereich der Drehmomentstütze 93 an dem Befestigungsabschnitt 81 des ersten Drehdurchführungsteils 15 befestigt.

Für das Ausführungsbeispiel, welches in **Fig. 10** dargestellt ist, sind die an der axialen Stirnseite des zweiten Drehdurchführungsteils 18 angeordneten Anschlüsse 80 der Fahrzeugrad-Drehdurchführung 11 genutzt. Von diesen erstreckt sich (durch entsprechende Bohrungen und Anschlüsse der Felge 89) die Reifendruck-Versorgungsleitung 9 und die Reifendruck-Steuerleitung 12 zu dem Reifendruckregelventil 5, dessen Ausgangsanschluss das Felgenbett 94 der Felge 89 durchsetzt und unmittelbar in das Innere des Reifens 3 mündet.

Zu erkennen ist in Fig. 10 auch der Drucksensor 4, der den Druck in dem Reifen 3 misst und den Druck drahtlos an die Steuereinheit, welche das Versorgungsventil 22, das Steuerventil 23 und das Dichtungs-Steuerventil 68 ansteuert, überträgt.

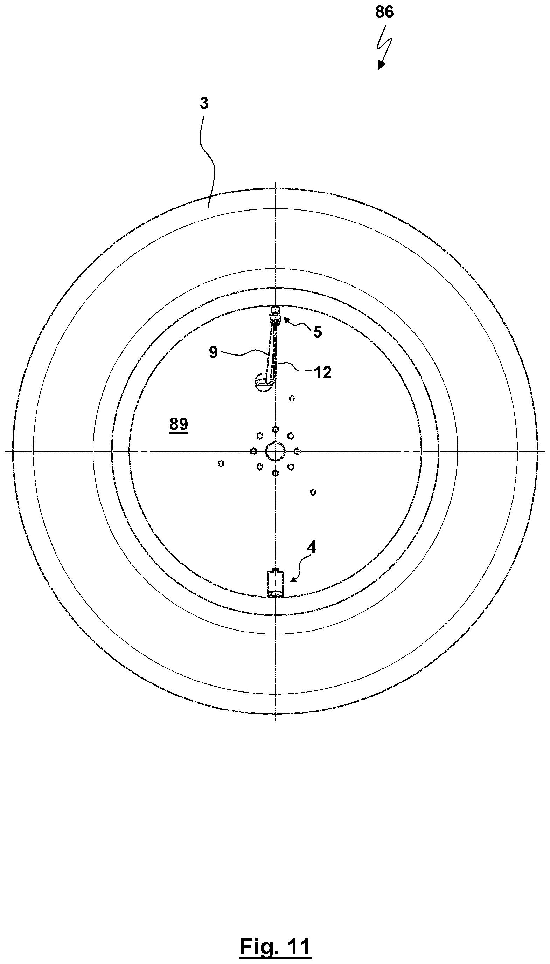

**Fig. 11** zeigt eine Vorderansicht der Fahrzeugrad-Baugruppe 86 gemäß Fig. 10.

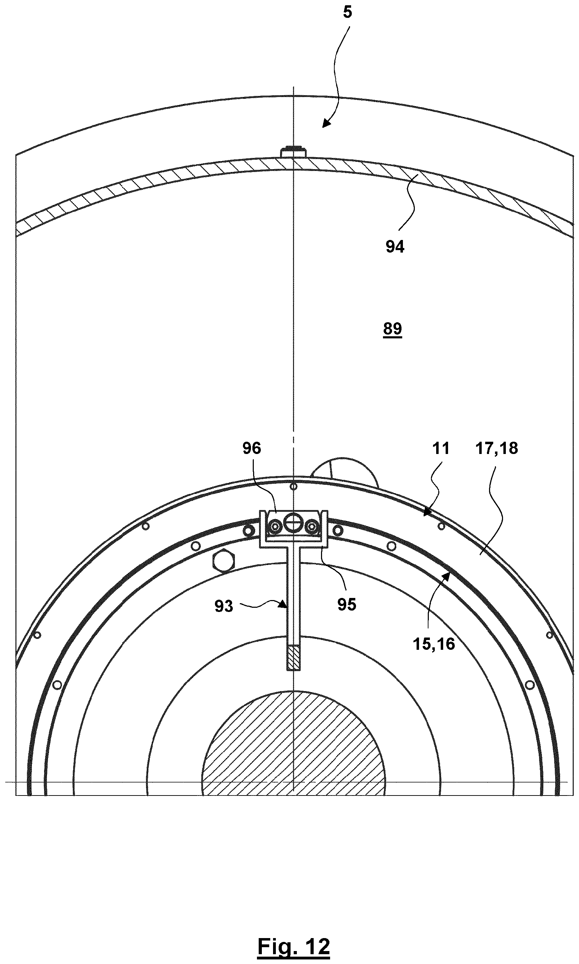

In dem Detailschnitt gemäß **Fig. 12** ist zu erkennen, dass die Drehmomentstütze 93 in dem Befestigungsbereich an der Fahrzeugrad-Drehdurchführung 11 gabelförmig ausgebildet ist, wobei die Gabel 95 ein Anschlussstück 96 für den Anschluss der Versorgungsleitung 90 und/oder der Steuerleitung 91 und/oder der Dichtungs-Steuerleitung 92 an die zugeordneten Eingangsanschlüsse der Fahrzeugrad-Drehdurchführung 11 in beide Umfangsrichtungen umgreift und auf diese Weise an dem Anschlussstück 96 abgestützt ist.

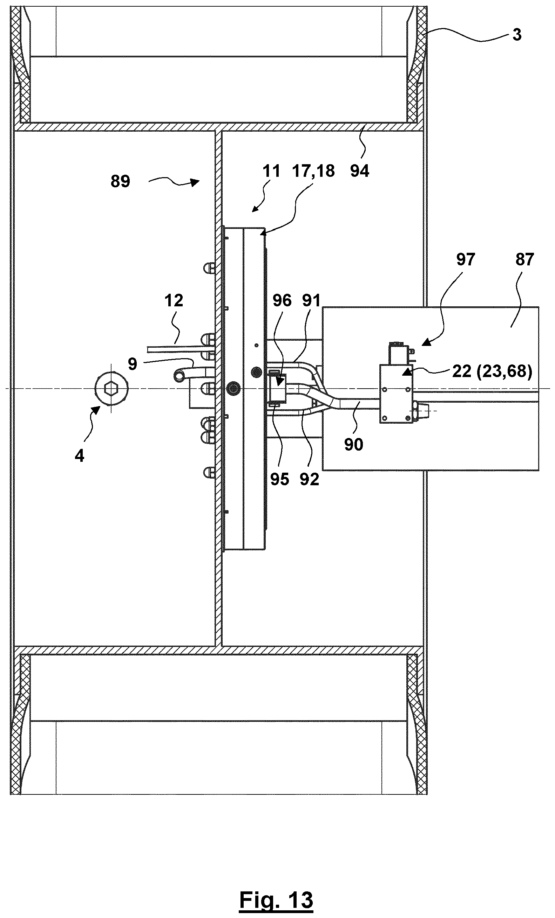

In dem Teillängsschnitt der Fahrzeugrad-Baugruppe 86 gemäß **Fig. 13****,** welcher gegenüber dem Längsschnitt gemäß Fig. 10 um 90° in Umfangsrichtung versetzt ist, ist zu erkennen, dass das Versorgungsventil 22, das Steuerventil 23 und das Dichtungs-Steuerventil 68 Teil einer Ventileinheit 97 sein können, wobei auch möglich ist, dass hier die Steuerung des Dichtungs-Steuerdrucks, des Steuerdrucks und des Versorgungsdrucks durch einen einzigen mehrere unterschiedliche Stellungen einnehmenden Ventilkörper erfolgt.

### BEZUGSZEICHENLISTE

- 1: Reifenfülleinrichtung
- 2: Fahrzeugrad
- 3: Reifen
- 4: Drucksensor
- 5: Reifendruckregelventil
- 6: Reifendruck-Steueranschluss
- 7: Reifendruck-Entlüftungsanschluss
- 8: Reifendruck-Versorgungsanschluss
- 9: Reifendruck-Versorgungsleitung
- 10: Versorgungs-Ausgangsanschluss
- 11: Fahrzeugrad-Drehdurchführung
- 12: Reifendruck-Steuerleitung
- 13: Steuer-Ausgangsanschluss
- 14: Rückschlagventil
- 15: erstes Drehdurchführungsteil
- 16: Stator
- 17: Rotor
- 18: zweites Drehdurchführungsteil
- 19: Lager
- 20: Versorgungs-Eingangsanschluss
- 21: Steuer-Eingangsanschluss
- 22: Versorgungsventil
- 23: Steuerventil
- 24: Wälzkörper
- 25: erster Kanal
- 26: zweiter Kanal
- 27: Übertrittsbereich
- 28: Axialbohrung
- 29: Stichbohrung
- 30: Umfangsnut
- 31: Zweigleitungskanal
- 32: Zweigleitungskanal
- 33: Dichtwirkungs-Steuerkammer
- 34: Dichtwirkungs-Steuerkammer
- 35: Dichtelement
- 36: Dichtelement
- 37: Dichtfläche
- 38: Dichtfläche
- 39: Dichtfläche
- 40: Dichtfläche
- 41: Dichtelement
- 42: Dichtelement
- 43: Dichtfläche
- 44: Dichtfläche
- 45: Dichteinheiten
- 46: Dichteinheiten
- 47: O-Ring
- 48: O-Ring
- 49: Gleitringe
- 50: Gleitringe
- 51: Umfangsnut
- 52: Dichteinheit
- 53: Dichteinheit
- 54: Zweigleitungskanal
- 55: Zweigleitungskanal
- 56: erster Kanal
- 57: Axialbohrung
- 58: Stichbohrung
- 59: Übertrittsbereich
- 60: zweiter Kanal
- 61: Anschlussabschnitt
- 62: Dichtwirkungs-Steuerkammer
- 63: Dichtwirkungs-Steuerkammer
- 64: Dichtungs-Steueranschluss
- 65: Axialbohrung
- 68: Dichtungs-Steuerventil
- 69: Schlitz
- 70: Schmiermittelanschluss
- 71: Axialbohrung
- 72: Stichbohrung
- 73: Stichbohrung
- 74: Stichbohrung
- 75: Dichtungs-Steuerkanal
- 76: Dichtungs-Steuerkanal
- 77: Teilring
- 78: Teilring
- 79: Anschlüsse
- 80: Anschluss
- 81: Befestigungsabschnitt
- 82: Querflächen
- 83: Stirnfläche
- 84: Stirnfläche
- 85: Spalt
- 86: Fahrzeugrad-Baugruppe
- 87: Fahrzeugradträger
- 88: Radlager
- 89: Felge
- 90: Versorgungsleitung
- 91: Steuerleitung
- 92: Dichtungs-Steuerleitung
- 93: Drehmomentstütze
- 94: Felgenbett
- 95: Gabel
- 96: Anschlussstück
- 97: Ventileinheit

## Patentansprüche

1. Radlastfreie Fahrzeugrad-Drehdurchführung (11) mit
a) einem ersten Drehdurchführungsteil (15), das einen ersten Kanal (25) aufweist,
b) einem relativ zu dem ersten Drehdurchführungsteil (15) verdrehbaren zweiten Drehdurchführungsteil (18), das einen zweiten Kanal (26) aufweist,
c) einem zwischen den Drehdurchführungsteilen (15, 18) ausgebildeten Übertrittsbereich (27), der
ca) den ersten Kanal (25) mit dem zweiten Kanal (26) pneumatisch verbindet und
cb) über Dichteinheiten (45, 46) mit einer Dichtwirkung abgedichtet ist,
d) einer Dichtwirkungs-Steuerkammer (33; 34),
da) in die ein Dichtungs-Steuerkanal (75; 76) mündet, über den die Dichtwirkungs-Steuerkammer (33; 34) mit einem Dichtungs-Steuerdruck beaufschlagt werden kann und
db) die durch die Dichteinheit (45, 46) in der Art eines verschieblichen Kolbens geschlossen ist, wobei die Dichtwirkung der Dichteinheit (45, 46) in Abhängigkeit von dem Dichtungs-Steuerdruck in der Dichtwirkungs-Steuerkammer (33; 34) veränderbar ist,
**dadurch gekennzeichnet, dass**
e) die Dichtwirkungs-Steuerkammer (33; 34) bis auf die Verbindung mit dem Dichtungs-Steuerkanal (75; 76) geschlossen ist, so dass diese nicht durchströmt wird.

2. Fahrzeugrad-Drehdurchführung (11) nach Anspruch 1, **dadurch gekennzeichnet, dass** der Dichtungs-Steuerdruck in der Dichtwirkungs-Steuerkammer (33; 34) die Dichteinheit (45, 46) in radialer Richtung mit einer Dichtkraft beaufschlagt und die Dichteinheit (45, 46) gegen eine zylindrische Dichtfläche (39, 40) eines Drehdurchführungsteils (18) presst.

3. Fahrzeugrad-Drehdurchführung (11) nach Anspruch 2, **dadurch gekennzeichnet, dass**
a) die Dichteinheit (45, 46)
aa) ein erstes Dichtelement (41; 42) aufweist, welches die Abdichtung an der zylindrischen Dichtfläche (39; 40) eines Drehdurchführungsteils (18) gewährleistet, und
ab) ein zweites Dichtelement (35; 36) aufweist, welches eine Abdichtung gegenüber der Dichtwirkungs-Steuerkammer (33; 34), die in dem anderen Drehdurchführungsteil (15) ausgebildet ist, gewährleistet,
b) wobei das erste Dichtelement (41; 42) und das zweite Dichtelement (35; 36) bei Beaufschlagung der Dichtwirkungs-Steuerkammer (33; 34) mit dem Dichtungs-Steuerdruck in radialer Richtung zur Gewährleistung einer Abdichtung aneinander angepresst werden.

4. Fahrzeugrad-Drehdurchführung (11) nach Anspruch 3, **dadurch gekennzeichnet, dass**
a) das erste Dichtelement (41; 42) ein eigensteifer Gleitring (49; 50) ist und/oder
b) das zweite Dichtelement (35; 36) ein elastischer Dichtring oder O-Ring (47; 48) ist.

5. Fahrzeugrad-Drehdurchführung (11) nach Anspruch 4, **dadurch gekennzeichnet, dass** der eigensteife Gleitring (49; 50) einen Schlitz aufweist.

6. Fahrzeugrad-Drehdurchführung (11) nach Anspruch 5, **dadurch gekennzeichnet, dass** der Schlitz nicht geradlinig ausgebildet ist.

7. Fahrzeugrad-Drehdurchführung (11) nach einem der vorhergehenden Ansprüche, **dadurch gekennzeichnet, dass** die Steifigkeit der Dichteinheit (45, 46) oder des Gleitrings (49; 50) derart bemessen ist, dass
a) der Radius der Dichteinheit (45, 46) oder des Gleitrings (49; 50) mit einer Vergrößerung des in der Dichtwirkungs-Steuerkammer (33; 34) wirkenden Dichtungs-Steuerdrucks elastisch vergrößert werden kann, womit die Dichteinheit (45, 46) oder der Gleitring (49; 50) mit einer sich vergrößernden Anpresskraft an die Dichtfläche (39; 40) gepresst werden kann, und/oder
b) der Radius der Dichteinheit (45, 46) oder des Gleitrings (49; 50) mit einer Verringerung des in der Dichtwirkungs-Steuerkammer (33; 34) wirkenden Dichtungs-Steuerdrucks elastisch verringert werden kann, womit sich die Dichtkraft zwischen der Dichteinheit (45, 46) oder des Gleitring (49; 50) und der Dichtfläche (39; 40) verringert.

8. Fahrzeugrad-Drehdurchführung (11) nach einem der vorhergehenden Ansprüche, **dadurch gekennzeichnet, dass** die Dichtwirkungs-Steuerkammer (33; 34) und der Übertrittsbereich (27) pneumatisch miteinander verbunden sind, sodass der Dichtungs-Steuerdruck und der Druck in dem Übertrittsbereich (27) voneinander abhängig sind.

9. Fahrzeugrad-Drehdurchführung (11) nach einem der vorhergehenden Ansprüche, **dadurch gekennzeichnet, dass** die Dichtwirkungs-Steuerkammer (33; 34) und der Übertrittsbereich (27) pneumatisch voneinander getrennt sind, sodass der Dichtungs-Steuerdruck und der Druck in dem Übertrittsbereich (27) unabhängig voneinander vorgebbar sind.

10. Fahrzeugrad-Drehdurchführung (11) nach Anspruch 9, **dadurch gekennzeichnet, dass**
a) ein Steuer-Eingangsanschluss (21) oder ein Versorgungs-Eingangsanschluss (20) vorhanden ist, der mit dem ersten Kanal (25) und über den Übertrittsbereich (27) mit dem zweiten Kanal (26) verbunden ist, und
b) ein Dichtungs-Steueranschluss (64) vorhanden ist, der mit der Dichtwirkungs-Steuerkammer (33; 34) verbunden ist.

11. Fahrzeugrad-Drehdurchführung (11) nach einem der vorhergehenden Ansprüche, **dadurch gekennzeichnet, dass** ein Schmiermittelanschluss (70) vorhanden ist, der mit einem Lager (19) verbunden ist, über welches die Drehdurchführungsteile (15, 18) verdrehbar zueinander gelagert sind.

12. Fahrzeugrad-Baugruppe (86) mit
a) einem Fahrzeugradträger (87),
b) einem relativ zum Fahrzeugradträger (87) rotierenden Fahrzeugrad (2) mit einem Reifen (3), und
c) einer Reifenfülleinrichtung (1), welche
ca) über eine Versorgungsleitung (90) verfügt, die von dem Fahrzeugradträger (87) ausgeht und einen Versorgungsdruck bereitstellt, über den ein Belüften des Reifens (3) erfolgen kann, oder
cb) über eine Steuerleitung (91) verfügt, die von dem Fahrzeugradträger (87) ausgeht und über welche ein Belüften, Sperren und/oder Entlüften des Reifens (3) gesteuert werden kann,
d) wobei die Reifenfülleinrichtung (1) eine Fahrzeugrad-Drehdurchführung (11) nach einem der vorhergehenden Ansprüche aufweist, über die eine Übertragung des Versorgungsdrucks oder des Steuerdrucks erfolgt, indem die Versorgungsleitung (90) oder die Steuerleitung (91) über den ersten Kanal (25), den Übertrittsbereich (27) und den zweiten Kanal (26) verläuft,
e) wobei insbesondere das Fahrzeugrad (2) über ein Radlager (88) an dem Fahrzeugradträger (87) gelagert ist und die Fahrzeugrad-Drehdurchführung (11) dem Kraftfluss von dem Fahrzeugrad (2) über das Radlager (88) zu dem Fahrzeugradträger (87) parallelgeschaltet ist, wozu beispielsweise das zweite Drehdurchführungsteil (18) an dem Fahrzeugrad (2) befestigt ist und das erste Drehdurchführungsteil (15) über die angeschlossenen Leitungen und über eine Drehmomentenstütze (93) mit dem Fahrzeugradträger (87) verbunden ist.

13. Selbstfahrende Arbeitsmaschine mit mindestens einer Fahrzeugrad-Baugruppe nach Anspruch 12.

14. Verfahren zum Betrieb einer Fahrzeugrad-Drehdurchführung (11), insbesondere einer Fahrzeugrad-Drehdurchführung (11) nach einem der Ansprüche 1 bis 11, mit folgenden Verfahrensschritten:
a) Beaufschlagung eines Steuer-Eingangsanschlusses (21) mit einem Steuerdruck oder eines Versorgungs-Eingangsanschlusses (20) mit einem Versorgungsdruck,
b) Beaufschlagung einer Dichtwirkungs-Steuerkammer (33; 34) mit einem Dichtungs-Steuerdruck und Erzeugung einer Dichtkraft zur Herbeiführung oder Erhöhung einer Dichtwirkung mindestens einer Dichteinheit (45; 46; 52; 53) und
c) Reduzierung des Dichtungs-Steuerdrucks in der Dichtwirkungs-Steuerkammer (33; 34) und Reduzierung der Dichtkraft zur Reduzierung der Dichtwirkung mindestens einer Dichteinheit (45; 46; 52; 53), wenn über die Fahrzeugrad-Drehdurchführung (11) kein Versorgungsdruck oder Steuerdruck übertragen werden soll.

15. Verfahren nach Anspruch 14, **dadurch gekennzeichnet, dass** gleichzeitig
a) ein Schmiermittelanschluss (70) mit einem Schmiermittel für ein Lager (19) und
b) ein Dichtungs-Steueranschluss (64) mit einem Dichtungs-Steuerdruck beaufschlagt werden.

## Claims

1. Vehicle wheel rotary feedthrough being free of a wheel load, the vehicle wheel rotary feedthrough (11) comprising
a) a first rotary feedthrough part (15), comprising a first channel (25),
b) a second rotary feedthrough part (18) which can be rotated relatively to the first rotary feedthrough part (15) and which comprises a second channel (26),
c) a transfer region (27) established between the rotary feedthrough parts (15, 18) which
ca) pneumatically connects the first channel (25) to the second channel (26) and
cb) is sealed by sealing units (45, 46) for providing a sealing effect
d) a sealing effect control chamber (33; 34),
da) into which a sealing control channel (75; 76) opens by which it is possible to bias the sealing effect control chamber (33; 34) with a sealing control pressure and
db) which is closed by the sealing unit (45, 46) like a moveable piston, the sealing effect of the sealing unit (45, 46) being changeable dependent on the sealing control pressure in the sealing effect control chamber (33; 34),
**characterized in that**
e) the sealing effect control chamber (33; 34) is closed with the exception of the connection to the sealing control channel (75; 76) so that there is no flow through the sealing effect control chamber (33; 34).

2. Vehicle wheel rotary feedthrough (11) of claim 1, **characterized in that** the sealing control pressure in the sealing effect control chamber (33; 34) biases the sealing unit (45, 46) in radial direction with a sealing force and presses the sealing unit (45, 46) against a cylindrical sealing surface (39, 40) of one rotary feedthrough part (18).

3. Vehicle wheel rotary feedthrough (11) of claim 2, **characterized in that**
a) the sealing unit (45, 46)
aa) comprises a first sealing element (41; 42) which provides the sealing at the cylindrical sealing surface (39; 40) of one rotary feedthrough part (18) and
ab) comprises a second sealing element (35; 36) which provides a sealing against the sealing effect control chamber (33; 34) which is formed in the other rotary feedthrough part (15),
b) when the sealing effect control chamber (33; 34) is biased by the sealing control pressure the first sealing element (41; 42) and the second sealing element (35; 36) are pressed against each other in radial direction for providing the sealing effect.

4. Vehicle wheel rotary feedthrough (11) of claim 3, **characterized in that**
a) the first sealing element (41; 42) is sliding ring (49; 50) having an inherent stiffness and/or
b) the second sealing element (35; 36) is an elastic sealing ring or O-ring (47; 48).

5. Vehicle wheel rotary feedthrough (11) of claim 4, **characterized in that** the sealing ring (49; 50) having an inherent stiffness comprises a slit.

6. Vehicle wheel rotary feedthrough (11) of claim 5, **characterized in that** the slit is not straight.

7. Vehicle wheel rotary feedthrough (11) of one of the preceding claims, **characterized in that** the stiffness of the sealing unit (45, 46) or of the sliding ring (49; 50) is dimensioned such that
a) the radius of the sealing unit (45, 46) or of the sliding ring (49; 50) can elastically be increased by an increase of the sealing control pressure being effective in the sealing effect control chamber so that the sealing unit (45, 46) or the sliding ring (49; 50) can be pressed with an increasing pressing force to the sealing surface (39; 40) and/or
b) the radius of the sealing unit (45, 46) or of the sliding ring (49; 50) can elastically be reduced by a reduction of the sealing control pressure being effective in the sealing effect control chamber (33; 34) so that the sealing force between the sealing unit (45, 46) or the sliding ring (49; 50) and the sealing surface (39; 40) is reduced.

8. Vehicle wheel rotary feedthrough (11) of one of the preceding claims, **characterized in that** the sealing effect control chamber (33; 34) and the transfer region (27) are pneumatically connected to each other so that the sealing control pressure and the pressure in the transfer region (27) depend on each other.

9. Vehicle wheel rotary feedthrough (11) of one of the preceding claims, **characterized in that** the sealing effect control chamber (33; 34) and the transfer region (27) are pneumatically separated from each other so that it is possible to set the sealing control pressure and the pressure in the transfer region (27) independent on each other.

10. Vehicle wheel rotary feedthrough (11) of claim 9, **characterized in that**
a) a control inlet port (21) or a supply inlet port (20) is provided which is connected to the first channel (25) and which is connected via the transfer region (27) to the second channel (26) and
b) a sealing control port (64) is provided which is connected to the sealing effect control chamber (33; 34).

11. Vehicle wheel rotary feedthrough (11) of one of the preceding claims, **characterized in that** a lubricant port (70) is provided which is connected to a bearing (19) by which the rotary feedthrough parts (15, 18) are supported for being rotated relatively to each other.

12. Vehicle wheel assembly group (86) comprising
a) a vehicle wheel carrier (87),
b) a vehicle wheel (2) comprising a tire (3) and rotating relatively to the vehicle wheel carrier (87) and
c) a tire filling arrangement (1) which
ca) comprises a supply line (90) which extends from the vehicle wheel carrier (87) and which provides a supply pressure by which it is possible to aerate the tire (3) or
cb) comprises a control line (91) which extends from the vehicle wheel carrier (87) and by which it is possible to aerate, block and/or de-aerate the tire (3),
d) wherein the tire filling apparatus (1) comprises a vehicle wheel rotary feedthrough (11) of one of the preceding claims which transfers the supply pressure or the control pressure which is due to the fact that the supply line (90) or the control line (91) includes the first channel (25), the transfer region (27) and the second channel (26),
e) wherein in particular the vehicle wheel (2) is supported by a wheel bearing (88) on the vehicle wheel carrier (87) and the vehicle wheel rotary feedthrough (11) and the force flow from the vehicle wheel (2) via the wheel bearing (88) to the vehicle wheel carrier (87) are arranged in mechanical parallel arrangement, the second rotary feedthrough part (18) being e.g. attached to the vehicle wheel (2) and the first rotary feedthrough part (15) e.g. being connected to the vehicle wheel carrier (87) via the connected lines and via a torque support (93).

13. Self-propelling working machine comprising at least one vehicle wheel assembly group of claim 12.

14. Method for operating a vehicle wheel rotary feedthrough (11), in particular method for operating a vehicle wheel rotary feedthrough (11) of one of claims 1 to 11, the method comprising the following method steps:
a) biasing a control inlet port (21) by a control pressure or biasing a supply inlet port (20) by a supply pressure,
b) biasing a sealing effect control chamber (33; 34) by a sealing control pressure and generating a sealing force for inducing or increasing a sealing effect of at least one sealing unit (45; 46; 52; 53) and
c) reducing the sealing control pressure in the sealing effect control chamber (33; 34) and reducing the sealing force for reducing the sealing effect of at least on sealing unit (45; 46; 52; 53) when no supply pressure or no control pressure has to be transferred via the vehicle wheel rotary feedthrough (11).

15. Method of claim 14, **characterized in that** at the same time
a) a lubricant port (70) is biased by a lubricant for a bearing (19) and
b) a sealing control port (64) is biased by a sealing control pressure.

## Revendications

1. Passage rotatif de roue de véhicule sans charge de roue (11) avec
a) une première partie de passage rotatif (15), qui comprend un premier canal (25),
b) une deuxième partie de passage rotatif (18) rotatif par rapport à la première partie de passage rotatif (15), qui comprend un deuxième canal (26),
c) une zone de dépassement (27) réalisée entre les parties de passage rotatif (15, 18), qui
ca) relie de manière pneumatique le premier canal (25) avec le deuxième canal (26) et
cb) est étanchéifiée par l'intermédiaire d'unité d'étanchéité (45, 46) avec une action d'étanchéification,
d) une chambre de contrôle d'effet d'étanchéité (33 ; 34),
da) dans laquelle débouche un canal de contrôle d'étanchéité (75 ; 76) par l'intermédiaire duquel la chambre de contrôle d'effet d'étanchéité (33 ; 34) peut être sollicitée avec une pression de contrôle d'étanchéité et
db) qui est fermée par l'unité d'étanchéité (45, 46) sous la forme d'un piston coulissant, dans lequel l'effet d'étanchéité de l'unité d'étanchéité (45, 46) peut être modifié en fonction de la pression de contrôle d'étanchéité dans la chambre de contrôle d'effet d'étanchéité (33 ; 34),
**caractérisé en ce que**
e) la chambre de contrôle d'effet d'étanchéité (33 ; 34) est fermée à l'exception de la liaison avec le canal de contrôle d'étanchéité (75 ; 76), de façon à ce qu'elle ne soit pas traversée.

2. Passage rotatif de roue de véhicule (11) selon la revendication 1, **caractérisé en ce que** la pression de contrôle d'étanchéité dans la chambre de contrôle d'effet d'étanchéité (33 ; 34) sollicite l'unité d'étanchéité (45, 46) dans la direction radiale avec une force d'étanchéité et comprime l'unité d'étanchéité (45, 46) contre une surface d'étanchéité cylindrique (39, 40) d'une partie de passage rotatif (18).

3. Passage rotatif de roue de véhicule (11) selon la revendication 2, **caractérisé en ce que**
a) l'unité d'étanchéité (45, 46)
aa) comprend un élément d'étanchéité (41 ; 42) qui garantit l'étanchéité au niveau de la surface d'étanchéité cylindrique (39 ; 40) d'une partie de passage de roue rotatif (18) et
ab) comprend un deuxième élément d'étanchéité (35 ; 36) qui garantit une étanchéité par rapport à la chambre de contrôle d'effet d'étanchéité (33 ; 34), qui est réalisé dans l'autre partie de passage de roue rotatif (15),
b) dans lequel le premier élément d'étanchéité (41 ; 42) et le deuxième élément d'étanchéité (35 ; 36) sont comprimés l'un contre l'autre lors d'une sollicitation de la chambre de contrôle d'effet d'étanchéité (33 ; 34) avec la pression de contrôle d'étanchéité dans la direction radiale afin de garantir une étanchéité.

4. Passage rotatif de roue de véhicule (11) selon la revendication 3, **caractérisé en ce que**
a) le premier élément d'étanchéité (41 ; 42) est une bague glissante intrinsèquement rigide (49 ; 50) et/ou
b) le deuxième élément d'étanchéité (35 ; 36) est une bague d'étanchéité élastique ou un joint torique (47 ; 48).

5. Passage rotatif de roue de véhicule (11) selon la revendication 4, **caractérisé en ce que** la bague glissante intrinsèquement rigide (49 ; 50) présente une fente.

6. Passage rotatif de roue de véhicule (11) selon la revendication 5, **caractérisé en ce que** la fente n'est pas réalisée en ligne droite.

7. Passage rotatif de roue de véhicule (11) selon l'une des revendications précédentes, **caractérisé en ce que** la rigidité de l'unité d'étanchéité (45, 46) ou de la bague glissante (49 ; 50) est dimensionnée de façon à ce que
a) le rayon de l'unité d'étanchéité (45, 46) ou de la bague glissante (49 ; 50) peut être agrandi de manière élastique avec une augmentation de la pression de contrôle d'étanchéité agissant dans la chambre de contrôle d'effet d'étanchéité (33 ; 34), ce qui permet de comprimer l'unité d'étanchéité (45, 46) ou la bague glissante (49 ; 50) avec une force de compression croissante contre la surface d'étanchéité (39 ; 40) et/ou
b) le rayon de l'unité d'étanchéité (45, 46) ou de la bague glissante (49 ; 50) peut être réduite de manière élastique avec une réduction de la pression de contrôle d'étanchéité agissant dans la chambre de contrôle d'effet d'étanchéité (33 ; 34), ce qui permet de réduire la force d'étanchéité entre l'unité d'étanchéité (45, 46) ou de la bague glissante (49 ; 50) et la surface d'étanchéité (39 ; 40).

8. Passage rotatif de roue de véhicule (11) selon l'une des revendications précédentes, **caractérisé en ce que** la chambre de contrôle d'effet d'étanchéité (33 ; 34) et la zone de débordement (27) sont reliées entre elles de manière pneumatique de façon à ce que la pression de contrôle d'étanchéité et la pression dans la zone de débordement (27) dépendent l'une de l'autre.

9. Passage rotatif de roue de véhicule (11) selon l'une des revendications précédentes, **caractérisé en ce que** la chambre de contrôle d'effet d'étanchéité (33 ; 34) et la zone de débordement (27) sont séparées l'une de l'autre de manière pneumatique, de façon à ce que la pression de contrôle d'étanchéité et la pression dans la zone de débordement (27) soient indépendantes l'une de l'autre.

10. Passage rotatif de roue de véhicule (11) selon la revendication 9, **caractérisé en ce que**
a) un raccord d'entrée de contrôle (21) ou un raccord d'entrée d'alimentation (20) est prévu, qui est relié avec le premier canal (25) et, par l'intermédiaire de la zone de débordement (27), avec le deuxième canal (26) et
b) un raccord de contrôle d'étanchéité (64) est prévu, qui est relié avec la chambre de contrôle d'effet d'étanchéité (33 ; 34).

11. Passage rotatif de roue de véhicule (11) selon l'une des revendications précédentes, **caractérisé en ce qu'**un raccord de lubrifiant (70) est prévu qui est relié avec un palier (19) par l'intermédiaire duquel les parties de passage rotatif (15, 18) sont logées de manière rotative entre elles.

12. Sous-ensemble de roue de véhicule (86) avec
a) un support de roue de véhicule (87),
b) une roue de véhicule (2) avec un pneu (3), rotative par rapport au support de roue de véhicule (87) et
c) un dispositif de gonflage de pneu (1) qui
ca) dispose d'une conduite d'alimentation (90) qui sort du support de roue de véhicule (87) et qui met à disposition une pression d'alimentation par l'intermédiaire de laquelle un gonflage du pneu (3) peut avoir lieu ou
cb) dispose d'une conduite de contrôle (91) qui sort du support de roue de véhicule (87) et par l'intermédiaire de laquelle un gonflage, un blocage et/ou un dégonflage du pneu (3) peut être contrôlé,
d) dans lequel le dispositif de gonflage de pneu (1) comprend un passage rotatif de roue de véhicule (11) selon l'une des revendications précédentes, par l'intermédiaire de laquelle une transmission de la pression d'alimentation ou de la pression de contrôle a lieu, grâce au fait que la conduite d'alimentation (90) ou la conduite de contrôle (91) s'étend par l'intermédiaire du premier canal (25), de la zone de débordement (27) et du deuxième canal (26),
e) dans lequel, plus particulièrement, la roue de véhicule (2) est logée, par l'intermédiaire d'un palier de roue (88), au niveau du support de roue de véhicule (87) et le passage rotatif de roue de véhicule (11) est branché en parallèle du flux de force, de la roue du véhicule (2), par l'intermédiaire du palier de roue (88), vers le support de roue de véhicule (87), la deuxième partie de passage rotatif (18) étant par exemple pour cela fixée à la roue du véhicule (2) et la première partie de passage rotatif (15) est reliée, par l'intermédiaire des conduites raccordées et par l'intermédiaire d'un support de couple (93), avec le support de roue de véhicule (87).

13. Engin de travail automobile avec au moins un sous-ensemble de roue de véhicule selon la revendication 12.

14. Procédé de fonctionnement d'un passage rotatif de roue de véhicule (11), plus particulièrement d'un passage rotatif de roue de véhicule (11) selon l'une des revendications 1 à 11, avec les étapes suivantes :
a) sollicitation d'un raccord d'entrée de contrôle (21) avec une pression de contrôle ou d'un raccord d'entrée d'alimentation (20) avec une pression d'alimentation,
b) sollicitation d'une chambre de contrôle d'effet d'étanchéité (33 ; 34) avec une pression de contrôle d'étanchéité et production d'une force d'étanchéité afin de provoquer ou d'augmenter un effet d'étanchéité d'au moins une unité d'étanchéité (45 ; 46 ; 52 ; 53) et
c) réduction de la pression de contrôle d'étanchéité dans la chambre de contrôle d'effet d'étanchéité (33 ; 34) et réduction de la force d'étanchéité afin de réduire l'effet d'étanchéité d'au moins une unité d'étanchéité (45 ; 46 ; 52 ; 53), lorsqu'aucune pression d'alimentation ou aucune pression de contrôle ne doit être transmise par l'intermédiaire du passage rotatif de roue de véhicule (11).

15. Procédé selon la revendication 14, **caractérisé en ce que**, simultanément
a) un raccord de lubrifiant (70) est alimenté avec un lubrifiant pour un palier (19)
b) un raccord de contrôle d'étanchéité (64) est sollicité avec une pression de contrôle d'étanchéité.
